# EUROPEAN PATENT APPLICATION

(11) **EP 4 742 029 A1**
(43) Date of publication of application: **13.05.2026**
(21) Application number: 24845751.7
(22) Date of filing: 22.05.2024
(51) Int. Cl.: G06F 3/16, H04M 1/72409, G06F 1/16

(54) **ELECTRONIC DEVICE AND METHOD FOR SWITCHING AUDIO PATH**

(30) Priority: 21.07.2023 KR 20230095088
(71) Applicant: Samsung Electronics Co., Ltd., Suwon-si, Gyeonggi-do 16677 (KR)
(72) Inventor: LEE, Myeongseok, Suwon-si Gyeonggi-do 16677 (KR); LEE, Sanghun, Suwon-si Gyeonggi-do 16677 (KR); LEE, Seungbum, Suwon-si Gyeonggi-do 16677 (KR)
(74) Representative: Nederlandsch Octrooibureau
(86) International application number: PCT/KR2024/006927
(87) International publication number: WO 2025/023447

(57) **Abstract**

This electronic device may comprise: a memory that stores instructions; a first communication circuit; a second communication circuit that is different from the first communication circuit; and at least one processor. The instructions may, when executed individually or collectively by the at least one processor, cause the electronic device to: establish a first connection, via the first communication circuit, with a wearable device that receives audio information; in the state in which the first connection is established, establish a second connection, via the second communication circuit, with an external electronic device identified from among one or more external electronic devices for screen mirroring; transmit, to the external electronic device, a message including address information of the wearable device used in the first connection, on the basis of identifying that the wearable device is worn by a user; and receive, from the external electronic device, a message including information indicating that a third connection between the external electronic device and the wearable device is established.

## Description

### [Technical Field]

The following descriptions relate to an electronic device and a method for switching an audio path.

### [Background Art]

An electronic device may be connected to another electronic device. For example, the electronic device may be connected to a wearable device that outputs audio information. For example, the audio information may be provided from the electronic device. In addition, the electronic device may be connected to an external electronic device to share a screen displayed on the electronic device. For example, information on the screen may be provided from the electronic device to the external electronic device.

### [Disclosure]

### [Technical Solution]

An electronic device, may comprise first communication circuitry. The electronic device may comprise memory, comprising one or more storage media, storing instructions. The electronic device may comprise second communication circuitry different from the first communication circuitry. The electronic device may comprise at least one processor comprising processing circuitry. The instructions, when executed individually or collectively by the at least one processor, may cause the electronic device to establish, through the first communication circuitry, a first connection with a wearable device receiving audio information. The instructions, when executed individually or collectively by the at least one processor, may cause the electronic device to, in a state in which the first connection is established, establish, through the second communication circuitry, a second connection with an external electronic device identified from among one or more external electronic devices for screen mirroring. The instructions, when executed individually or collectively by the at least one processor, may cause the electronic device to, based on identifying that the wearable device is worn by a user, transmit, to the external electronic device, a message including address information of the wearable device used in the first connection. The instructions, when executed individually or collectively by the at least one processor, may cause the electronic device to receive, from the external electronic device, a message including information indicating that a third connection between the external electronic device and the wearable device is established.

A method performed by an electronic device may comprise establishing, through first communication circuitry of the electronic device, a first connection with a wearable device receiving audio information. The method may comprise, in a state in which the first connection is established, establishing, through second communication circuitry of the electronic device, a second connection with an external electronic device identified from among one or more external electronic devices for screen mirroring. The method may comprise, based on identifying that the wearable device is worn by a user, transmitting, to the external electronic device, a message including address information of the wearable device used in the first connection. The method may comprise receiving, from the external electronic device, a message including information indicating that a third connection between the external electronic device and the wearable device is established.

A non-transitory computer-readable storage medium may store one or more programs comprising instructions that, when executed individually or collectively by at least one processor of an electronic device including first communication circuitry and second communication circuitry different from the first communication circuitry, cause the electronic device to establish, through the first communication circuitry, a first connection with a wearable device receiving audio information. The non-transitory computer-readable storage medium may store one or more programs comprising instructions that, when executed individually or collectively by the at least one processor, cause the electronic device to, in a state in which the first connection is established, establish, through the second communication circuitry, a second connection with an external electronic device identified from among one or more external electronic devices for screen mirroring. The non-transitory computer-readable storage medium may store one or more programs comprising instructions that, when executed individually or collectively by the at least one processor, cause the electronic device to, based on identifying that the wearable device is worn by a user, transmit, to the external electronic device, a message including address information of the wearable device used in the first connection. The non-transitory computer-readable storage medium may store one or more programs comprising instructions that, when executed individually or collectively by the at least one processor, cause the electronic device to receive, from the external electronic device, a message including information indicating that a third connection between the external electronic device and the wearable device is established.

An electronic device may comprise first communication circuitry. The electronic device may comprise memory, comprising one or more storage media, storing instructions. The electronic device may comprise second communication circuitry different from the first communication circuitry. The electronic device may comprise at least one processor comprising processing circuitry. The instructions, when executed individually or collectively by the at least one processor, may cause the electronic device to establish, through the first communication circuitry, a first connection with an external electronic device for screen mirroring. The instructions, when executed individually or collectively by the at least one processor, may cause the electronic device to receive, through the first communication circuitry, from the external electronic device, a message including address information used in a second connection between a wearable device worn by a user and the external electronic device. The instructions, when executed individually or collectively by the at least one processor, may cause the electronic device to establish, through the second communication circuitry, a second connection with the wearable device identified based on the message including the address information. The instructions, when executed individually or collectively by the at least one processor, may cause the electronic device to transmit, to the external electronic device, a message including information indicating that the second connection is established.

### [Description of the Drawings]

FIG. 1 is a block diagram of an electronic device in a network environment according to various embodiments.
FIGS. 2A and 2B illustrate an example in which an electronic device connected to a wearable device that outputs audio information establishes a connection with an external electronic device for screen mirroring.
FIG. 3 illustrates an example of a block diagram of a functional configuration of each of an electronic device, a wearable device, and an external electronic device.
FIG. 4 illustrates an example of a method for switching an audio path in association with screen mirroring.
FIG. 5 illustrates an example of an operation flow of a method in which an electronic device switches an audio path in association with screen mirroring.
FIG. 6 illustrates an example of a method for performing control with respect to media while screen mirroring is being performed.
FIG. 7 illustrates an example of an operation flow of a method in which an electronic device performs control with respect to media while screen mirroring is being performed.
FIG. 8A illustrates an example of a method in which an electronic device connects to a wearable device in response to a pause of screen mirroring.
FIG. 8B illustrates an example of an operation flow of a method in which an electronic device connects to a wearable device in response to a pause of screen mirroring.
FIG. 9A illustrates an example of a method in which an electronic device connects to a wearable device in response to identifying receipt of a voice call.
FIG. 9B illustrates an example of an operation flow of a method in which an electronic device connects to a wearable device in response to identifying receipt of a voice call.
FIG. 10 illustrates an example of an operation flow of a method in which an electronic device establishes a connection for screen mirroring and switches an audio path in association with screen mirroring.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

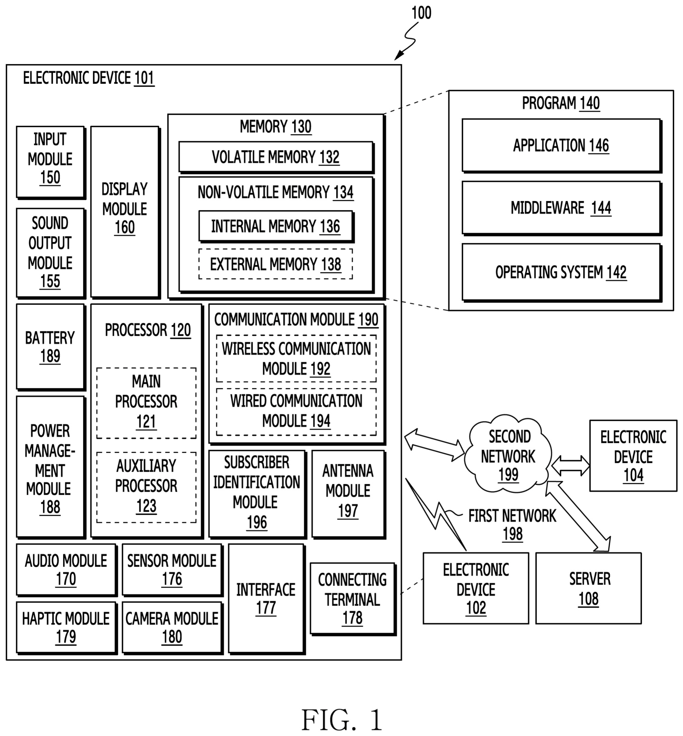

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

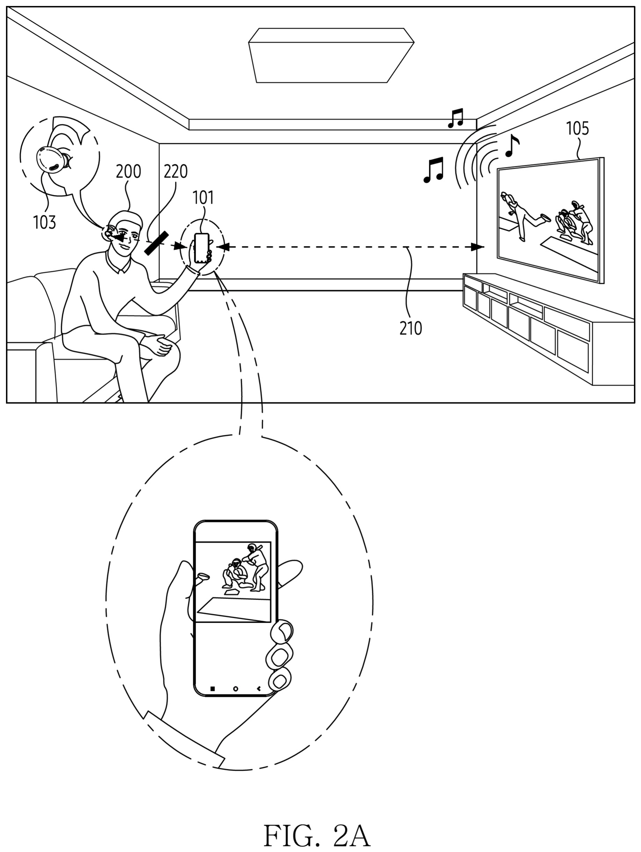

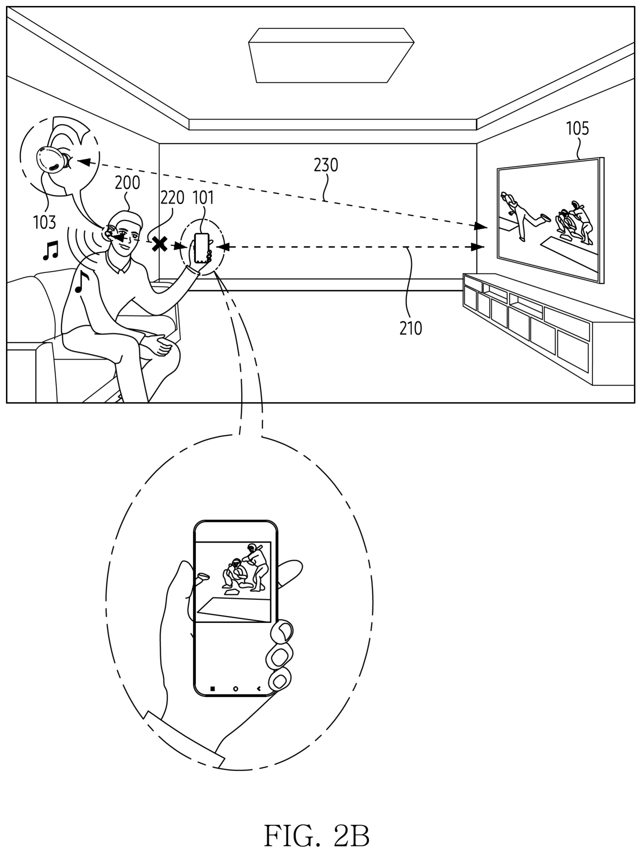

FIGS. 2A and 2B illustrate an example in which an electronic device connected to a wearable device that outputs audio information establishes a connection with an external electronic device for screen mirroring.

FIG. 2A illustrates an example in which an electronic device 101, in a state of being connected to a wearable device 103 that outputs audio information, establishes a connection with an external electronic device 105 for screen mirroring. For example, the wearable device 103 may receive the audio information and may output the received audio information.

Referring to FIG. 2A, the electronic device 101 may establish a connection 220 with the wearable device 103 that outputs the audio information. For example, the electronic device 101 may establish the connection 220 with the wearable device 103 based on first communication circuitry included in the electronic device 101. For example, the first communication circuitry may include a module that provides a first communication scheme. For example, the first communication scheme may include short-range wireless communication including Bluetooth (BT) or Bluetooth low energy (BLE). Hereinafter, the first communication scheme may be referred to as a BT connection scheme. However, an embodiment of the present disclosure is not limited thereto.

For example, in a state in which the connection 220 is established, the electronic device 101 may provide the audio information to the wearable device 103. Accordingly, the wearable device 103 may output the audio information through an output device. For example, the wearable device 103 may include an electronic device that may be worn on a body part of a user 200. For example, the body part may include a head part or an ear. However, an embodiment of the present disclosure is not limited thereto. In addition, the wearable device 103 may include an electronic device that outputs the audio information. For example, the wearable device 103 may include a true wireless stereo (TWS) or an extended reality (XR) device. Hereinafter, the wearable device 103 may be referred to as an audio output device, a pairing device, or a second external electronic device.

For example, in a state in which the connection 220 is established, the electronic device 101 may play media. For example, the media may include a video that includes video information and audio information. While playing the media, the electronic device 101 may provide the audio information on the media through the wearable device 103 with which the connection 220 is established. The wearable device 103 may provide the audio information to the user 200.

Referring to FIG. 2A, in a state in which the connection 220 is established, the electronic device 101 may establish a connection 210 with the external electronic device 105 for screen mirroring. For example, the electronic device 101 may establish the connection 210 with the external electronic device 105 based on second communication circuitry included in the electronic device 101. For example, the second communication circuitry may be different from the first communication circuitry. For example, the second communication circuitry may include a module that provides a second communication scheme different from the first communication scheme. For example, the second communication scheme may include short-range wireless communication including wireless fidelity (Wi-Fi) or Wi-Fi direct. Hereinafter, the second communication scheme may be referred to as a Wi-Fi connection scheme. However, an embodiment of the present disclosure is not limited thereto. The screen mirroring may indicate a technology of providing the media played on the electronic device 101 to the external electronic device 105. For example, the screen mirroring may be referred to as real time streaming, Miracast, mirroring, a mirroring mode, a mirroring function, wireless screen sharing, screen sharing, or a screen sharing mode.

For example, in a state in which the connection 210 is established, the electronic device 101 may provide data for performing the screen mirroring to the external electronic device 105. For example, the data may include the video information and the audio information of the media. Accordingly, the external electronic device 105 may provide the media through a display and an output device of the external electronic device 105. For example, the external electronic device 105 may include the display for displaying the video information of the media and the output device for outputting the audio information of the media. However, an embodiment of the present disclosure is not limited thereto. For example, the external electronic device 105 may include the display among the display and the output device.

As described above, in a state in which the connection 220 with the wearable device 103 worn by the user 200 is established, the electronic device 101 may establish the connection 210 with the external electronic device 105 for the screen mirroring. At this time, in response to the connection 210 being established, the audio information of the media may not be outputted through the wearable device 103 and may be outputted through the external electronic device 105. This is because an audio output policy of the electronic device 101 is set to output the audio information through an electronic device (e.g., the external electronic device 105) to which the electronic device 101 most recently connected. As the connection 210 for the screen mirroring is performed later than the connection 220, the external electronic device 105 other than the wearable device 103 may output the audio information. That is, as the connection 210 is established while receiving the audio information through the wearable device 103, the user 200 may not receive the audio information through the wearable device 103. In order to receive the audio information through the wearable device 103 according to the audio output policy, the user 200 may re-establish the connection 220 between the electronic device 101 and the wearable device 103 after the connection 210 is established. However, in this case, due to processing time (or latency) required for the external electronic device 105 to play the media, sync between the audio information played through the wearable device 103 and the video information played through the external electronic device 105 may be mismatched (i.e., async).

In an example, in a state in which the connection 220 is established, the user 200 may perform control with respect to the electronic device 101 based on a gesture (e.g., tap or press) with respect to the wearable device 103. For example, the control may include play, pause, next/previous playback, or volume adjustment of media. However, in a state in which the connection 210 is established after the connection 220 has been established, the user 200 may perform establishment of a connection between the external electronic device 105 and the wearable device 103 in order to listen to the audio information through the wearable device 103. However, in this case, since an entity providing the media is the electronic device 101, and a target to which the wearable device 103 is connected is the external electronic device 105, control with respect to the electronic device 101 (or the media) based on the gesture with respect to the wearable device 103 may not be performed.

FIG. 2B illustrates an example in which a connection between the wearable device 103 and the external electronic device 105 is established after the electronic device 101 establishes a connection with the external electronic device 105 for screen mirroring.

Referring to FIG. 2B, the electronic device 101 illustrates an example in which, after the connection 210 for screen mirroring is established, a connection 230 is performed through information (e.g., address information of the wearable device 103 used in the connection 220) provided by the electronic device 101 in a process of the connection 210.

According to an embodiment, the electronic device 101 may provide the information to the external electronic device 105 while establishing the connection 210. The external electronic device 105 may identify the wearable device 103 based on the information (e.g., address information of the wearable device 103, device information of the wearable device 103, and the like) and may establish the connection 230. The electronic device 101 may disconnect the connection 220 based on identifying that the connection 230 is established. While performing the screen mirroring, the electronic device 101 may provide data (the video information and the audio information) for the media to the external electronic device 105. In addition, the external electronic device 105 may provide the audio information to the wearable device 103. The external electronic device 105 may display a screen based on the video information, and the wearable device 103 may output the audio information.

Hereinafter, an electronic device and a method according to embodiments of the present disclosure may provide an automatic connection between the wearable device 103 and the external electronic device 105 in order for the user 200 to maintain a user experience in a case in which screen mirroring is attempted in a state in which the wearable device 103 is connected to the electronic device 101. Accordingly, the user 200 may continuously listen to audio information through the wearable device 103 being worn, and may view video information through the external electronic device 105, which has a relatively larger screen. In addition, based on the connection, the user 200 may perform control with respect to the electronic device 101 (or the media) using the gesture with respect to the wearable device 103. Accordingly, even if a connection target of the wearable device 103 is switched from the electronic device 101 to the external electronic device 105, the user 200 may be provided with the same user experience. In addition, the electronic device and the method according to embodiments of the present disclosure may provide an automatic connection between the electronic device 101 and the wearable device 103 in a case in which a specific event occurs while performing the screen mirroring using the connection between the wearable device 103 and the external electronic device 105. According to an embodiment, the specific event may include a pause (or a stop) of the screen mirroring or receipt of a voice call. Accordingly, the user 200 may be provided with a continuous user experience, as if the connection between the electronic device 101 and the wearable device 103 is maintained. For example, the automatic connection may indicate switching of an audio path. For example, the switching of the audio path may be referred to as pair switching, paired device switching, or audio path switching.

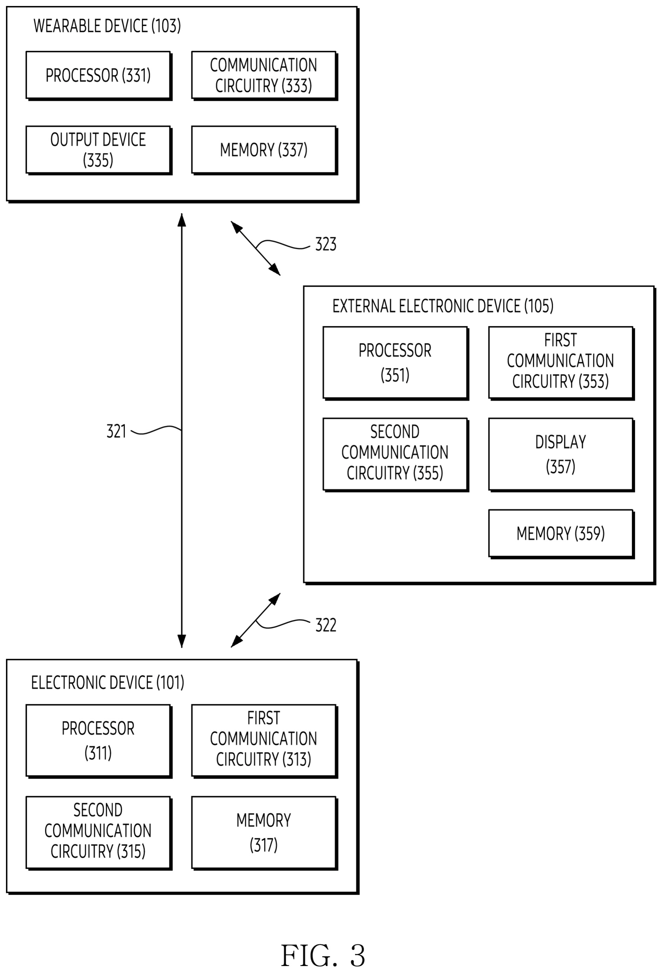

FIG. 3 illustrates an example of a block diagram of a functional configuration of each of an electronic device, a wearable device, and an external electronic device.

FIG. 3 illustrates an example of an electronic device 101, and a wearable device 103 and an external electronic device 105 both connected to the electronic device 101. FIG. 3 illustrates a case in which the electronic device 101 is connected to the wearable device 103 and the external electronic device 105, an embodiment of the present disclosure is not limited thereto. For example, the electronic device 101 may be connected to a plurality of wearable devices. Alternatively, for example, the external electronic device 105 may be connected to other electronic devices. The electronic device 101 of FIG. 3 may indicate an example of the electronic device 101 of FIG. 1.

Referring to FIG. 3, an exemplary situation is illustrated in which the electronic device 101, the wearable device 103, and the external electronic device 105 are connected to each other based on a wired network and/or a wireless network. For example, the wired network may include a network such as the Internet, a local area network (LAN), a wide area network (WAN), or a combination thereof. For example, the wireless network may include a network such as long term evolution (LTE), 5g new radio (NR), wireless fidelity (Wi-Fi), Zigbee, near field communication (NFC), Bluetooth, Bluetooth low-energy (BLE), or a combination thereof. Although the electronic device 101, the wearable device 103, and the external electronic device 105 are illustrated as being directly connected, the electronic device 101, the wearable device 103, and the external electronic device 105 may be indirectly connected through one or more routers and/or an access point (AP). In other words, although the electronic device 101 is exemplified as being directly connected to second communication circuitry 355 of the external electronic device 105 through second communication circuitry 315, an embodiment of the present disclosure is not limited thereto.

Referring to FIG. 3, according to an embodiment, the electronic device 101 may include at least one of a processor 311, first communication circuitry 313, the second communication circuitry 315, or memory 317. According to an embodiment, the processor 311, the first communication circuitry 313, the second communication circuitry 315, and the memory 317 may be electronically and/or operably coupled with each other by a communication bus. Hereinafter, hardware components being operably coupled may mean that a direct connection or an indirect connection between the hardware components is established by wire or wirelessly, such that a second hardware component is controlled by a first hardware component from among the hardware components. Although illustrated based on different blocks, an embodiment is not limited thereto, and a portion (at least a portion of the processor 311, the first communication circuitry 313, the second communication circuitry 315, and the memory 317) of the hardware components illustrated in FIG. 3 may be included in a single integrated circuit such as a system on a chip (SoC). A type and/or the number of hardware components included in the electronic device 101 is not limited to what is illustrated in FIG. 3. For example, the electronic device 101 may include only a portion of the hardware components illustrated in FIG. 3.

According to an embodiment, the processor 311 of the electronic device 101 may include a hardware component for processing data based on one or more instructions. The hardware component for processing data may include, for example, an arithmetic and logic unit (ALU), a floating point unit (FPU), and/or a field programmable gate array (FPGA). As an example, the hardware component for processing data may include a central processing unit (CPU), a graphics processing unit (GPU), a digital signal processing (DSP), and/or a neural processing unit (NPU). The number of processors 311 may be one or more. For example, the processor 311 may have a multi-core processor structure, such as a dual core, a quad core, or a hexa core. The processor 311 of FIG. 3 may include at least a portion of the processor 120 of FIG. 1.

For example, the processor 311 may include various processing circuitry and/or a plurality of processors. For example, a term "processor" used in the document, including the claims, may include various processing circuitry including at least one processor, and one or more of the at least one processor may be configured to perform various functions described below individually and/or collectively in a distributed manner. As used below, in a case that terms "processor," "at least one processor," and "one or more processors," are described as being configured to perform various functions, these terms encompass, for example without limitation, situations in which one processor performs a portion of cited functions and other processor(s) performs another portion of the cited functions, and also situations in which one processor may perform all of the cited functions. In addition, the at least one processor may include a combination of processors that perform various enumerated/disclosed functions, for example, in a distributed manner. The at least one processor may execute program instructions to achieve or perform various functions.

According to an embodiment, the first communication circuitry 313 of the electronic device 101 may include hardware for supporting transmission and/or reception of an electrical signal between the electronic device 101 and the wearable device 103. In addition, the second communication circuitry 315 of the electronic device 101 may include hardware for supporting transmission and/or reception of an electrical signal between the electronic device 101 and the external electronic device 105. For example, the first communication circuitry 313 (or the second communication circuitry 315) may, for example, include at least one of a modem, an antenna, or an optic/electronic (O/E) converter. For example, the first communication circuitry 313 (or the second communication circuitry 315) may support transmission and/or reception of an electrical signal based on various types of communication means, such as Ethernet, Bluetooth (BT), Bluetooth low energy (BLE), ZigBee, long term evolution (LTE), 5G new radio (NR), or wireless-fidelity (Wi-Fi). The first communication circuitry 313 (or the second communication circuitry 315) of FIG. 3 may include at least a portion of the communication module 190 and/or the antenna module 197 of FIG. 1.

According to an embodiment, the first communication circuitry 313 and the second communication circuitry 315 may provide different communication schemes. For example, the first communication circuitry 313 may include a module that provides a first communication scheme. For example, the first communication scheme may include short-range wireless communication including Bluetooth (BT) or Bluetooth low energy (BLE). Hereinafter, the first communication scheme may be referred to as a BT connection scheme. For example, the second communication circuitry 315 may be different from the first communication circuitry 313. For example, the second communication circuitry 315 may include a module that provides a second communication scheme different from the first communication scheme. For example, the second communication scheme may include short-range wireless communication including wireless fidelity (Wi-Fi) or Wi-Fi direct. Hereinafter, the second communication scheme may be referred to as a Wi-Fi connection scheme.

According to an embodiment, the memory 317 of the electronic device 101 may include a hardware component for storing data and/or instructions that are inputted to and/or outputted from the processor 311. The memory 317 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, or pseudo SRAM (PSRAM). The non-volatile memory may include, for example, at least one of programmable ROM (PROM), erasable PROM (EPROM), electrically erasable PROM (EEPROM), flash memory, a hard disk, a compact disk, or an embedded multimedia card (eMMC). The memory 317 of FIG. 3 may include at least a portion of the memory 130 of FIG. 1.

Although not illustrated in FIG. 3, according to an embodiment, the electronic device 101 may include at least one sensor. For example, the electronic device 101 may include the at least one sensor for identifying a designated event, another designated event, and an input of a user. For example, the at least one sensor may include an IMU (or an IMU sensor), a bio sensor, an image sensor (or a camera), an acoustic sensor (or a microphone (or a mic)), a gyro sensor, a gravity sensor, and/or an acceleration sensor. In addition, although not illustrated in FIG. 3, according to an embodiment, the electronic device 101 may include an output means for outputting information in another form other than a visualized form. For example, the electronic device 101 may include a speaker for outputting an acoustic signal. For example, the electronic device 101 may include a motor for providing haptic feedback based on vibration.

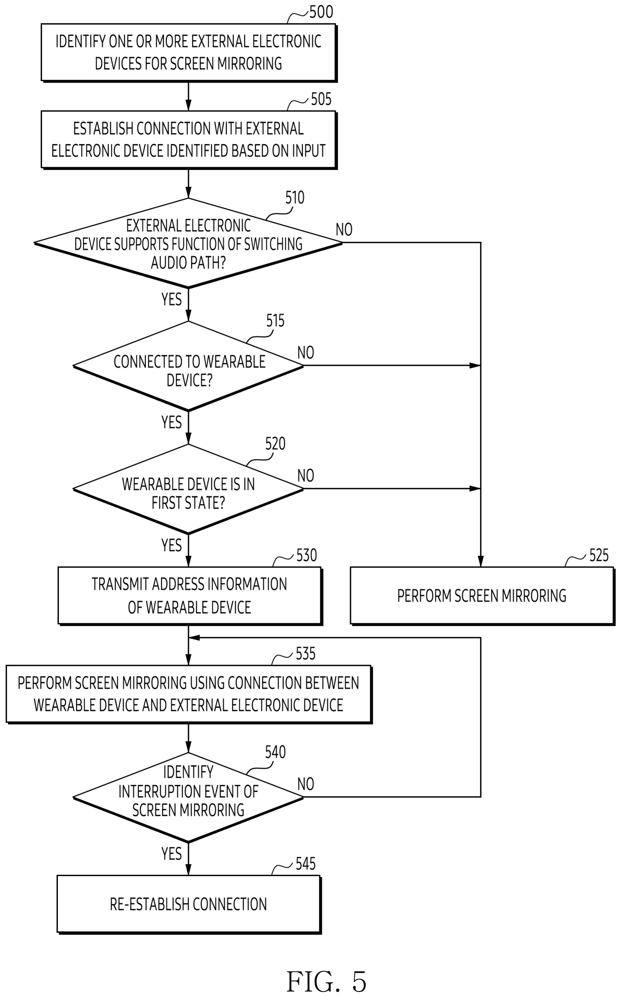

Referring to FIG. 3, according to an embodiment, one or more instructions (or commands) indicating a computation and/or an operation to be performed by the processor 311 of the electronic device 101 on data may be stored in the memory 317 of the electronic device 101. A set of one or more instructions may be referred to as a program, firmware, an operating system, a process, a routine, a sub-routine, and/or an application. Hereinafter, an application being installed in an electronic device (e.g., the electronic device 101) may mean that one or more instructions provided in a form of an application are stored in the memory 317, and that the one or more applications are stored in a format (e.g., a file having an extension designated by an operating system of the electronic device 101) executable by a processor of the electronic device. According to an embodiment, the electronic device 101 may perform operations of FIG. 5, 7, 8B, 9B, and 10 by executing one or more instructions stored in the memory 317.

Referring to FIG. 3, programs installed in the electronic device 101 may be classified into any one layer among different layers including an application layer, a framework layer, and/or a hardware abstraction layer (HAL), based on a target. For example, in the hardware abstraction layer, programs designed to target hardware (e.g., the first communication circuitry 313) of the electronic device 101 may be classified. For example, in the framework layer, programs designed to target at least one of the hardware abstraction layer and/or the application layer (e.g., a switching manager) may be classified. The programs classified into the framework layer may provide an application programming interface (API) executable based on another program. The switching manager may be referred to as an audio path switching manager, a pair switching manager, a paired device switching manager, a switching controller, or a switching control unit. In the example, an example in which the switching manager is configured as a software program is described, but an embodiment of the present disclosure is not limited thereto. For example, the switching manager may be configured as a combination of hardware and software.

Referring to FIG. 3, based on execution of the switching manager, the processor 311 may identify whether the external electronic device 105 supports a function for switching an audio path (or capability information). For example, the processor 311 may identify whether the function (e.g., an audio path switching function) is supported through the capability information included in a message obtained from the external electronic device 105, and may store the capability information in the memory 317. Thereafter, based on the execution of the switching manager, the processor 311 may perform (or request) the audio path switching based on the capability information.

In addition, for example, based on the execution of the switching manager, the processor 311 may identify a connection state and a wearing state of the wearable device 103. For example, the processor 311 may identify whether the wearable device 103 is connected to the electronic device 101. In addition, for example, based on the execution of the switching manager, the processor 311 may identify whether the wearable device 103 is in a state of being worn on a body part (e.g., an ear) of a user. According to an embodiment, the wearable device 103 may identify whether the user is wearing the wearable device 103 based on sensing information identified through at least one sensor included in the wearable device 103. For example, the at least one sensor may include a sensor (e.g., a proximity sensor or an acceleration sensor) for identifying a worn state of the wearable device 103. For example, the processor 311 may identify, based on the sensing information, whether the wearable device 103 is in a state of being worn on the body part of the user. For example, the worn state may be referred to as a first state. In contrast, a state in which the wearable device 103 is not worn may be referred to as a second state. For example, the second state may include a case in which the wearable device 103 is positioned inside a case for storing the wearable device 103 with the case in an open state, a case in which the wearable device 103 is positioned inside the case with the case in a closed state, a case in which the wearable device 103 is positioned outside the case, or a case in which it is not possible to identify whether the wearable device is worn (or an unknown state). The first state and the second state may be defined as a value identified based on the execution of the switching manager. The value defining the first state and the second state may be exemplified as illustrated in the following table.

**[Table 1]**

| |
|---|
| [Tag] |
| STATE_WEARING_L =0x0206; |
| STATE_WEARING_R =0x0207; |
| [Value] |
| VALUE_PLACEMENT_UNKNOWN =0x00; |
| VALUE_PLACEMENT_IN_EAR =0x01; |
| VALUE_PLACEMENT_OUTSIDE =0x02; |
| VALUE_PLACEMENT_IN_OPEN_CASE =0x03; |
| VALUE_PLACEMENT_IN_CLOSE_CASE =0x04; |

A tag of the table may indicate identification information of a plurality of devices included in the wearable device 103. For example, a case in which the tag is L may indicate a first device worn on a left ear from among the plurality of devices, and a case in which the tag is R may indicate a second device worn on a right ear from among the plurality of devices. However, an embodiment of the present disclosure is not limited thereto, and in a case in which the wearable device 103 is an integrated type (e.g., a headset) worn simultaneously on both the left ear and the right ear, the tag may be one value or may be omitted. A value of the table may indicate a value according to the first state or the second state. The processor 311 may identify the connection state and the wearing state by identifying the tag and the value based on the execution of the switching manager. According to an embodiment, in a case in which the wearable device 103 includes the plurality of devices and at least one device from among the plurality of devices is in the first state, the processor 311 may perform (or request) the audio path switching.

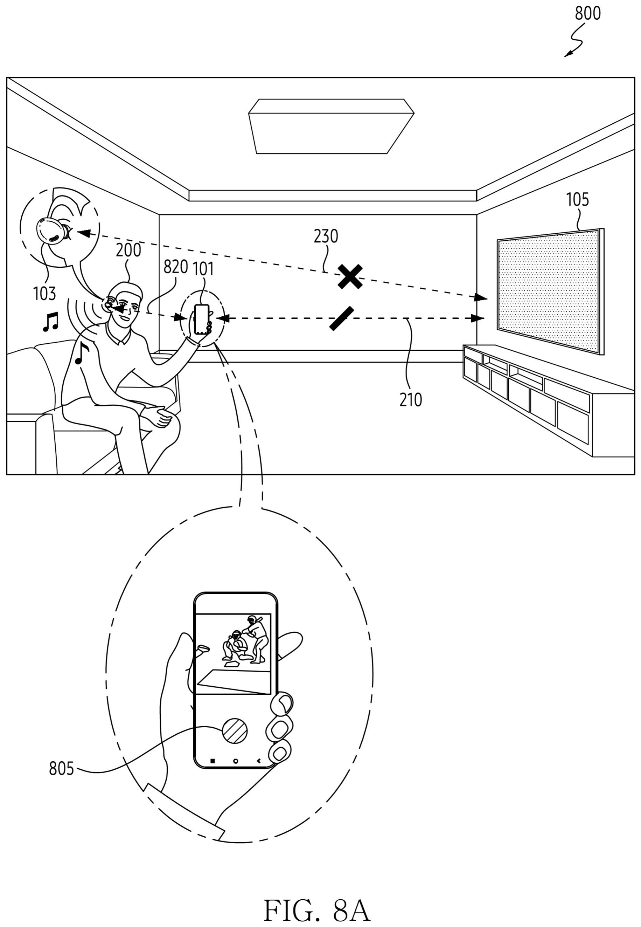

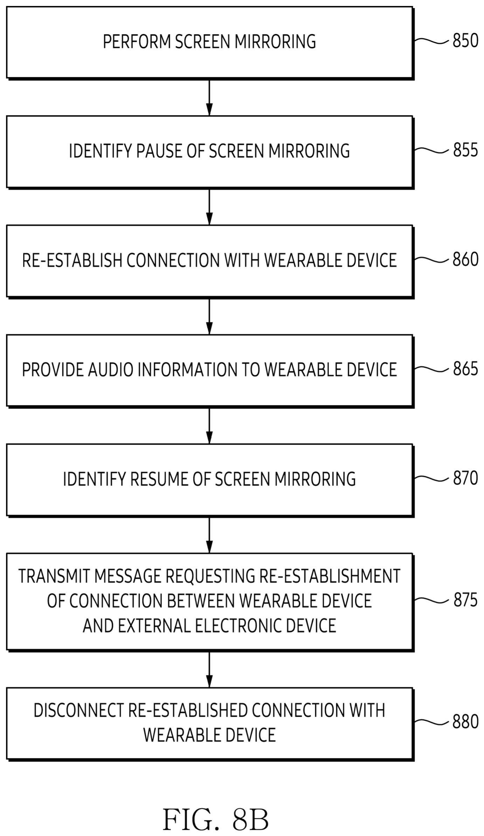

In addition, for example, based on the execution of the switching manager, the processor 311 may identify a pause (or a stop) of screen mirroring. For example, the processor 311 may identify the pause based at least in part on an input to the electronic device 101. In addition, the processor 311 may identify a resume of the paused screen mirroring. Accordingly, the processor 311 may perform (or request) the audio path switching based on the pause or the resume. Specific details related thereto are described below in FIGS. 8A and 8B.

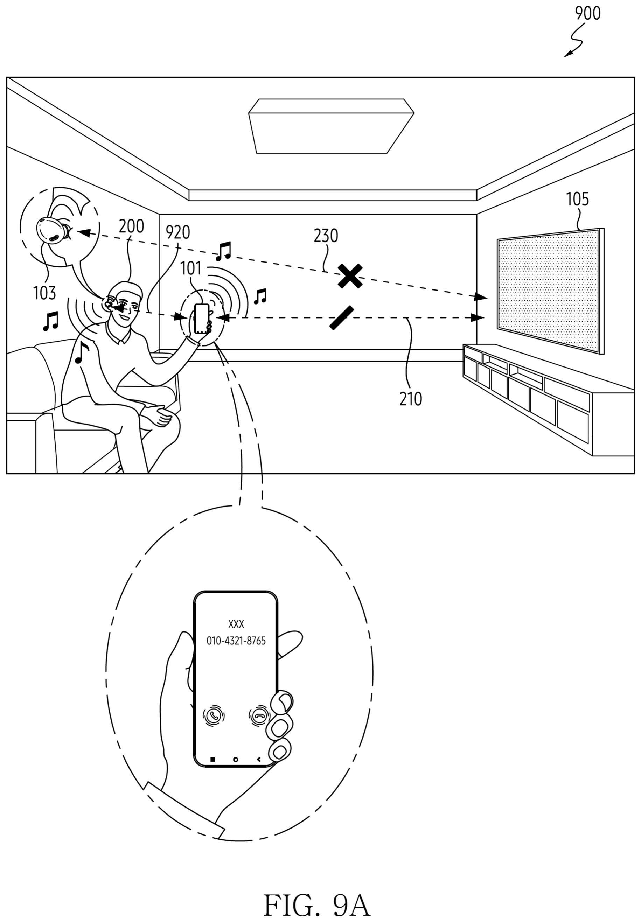

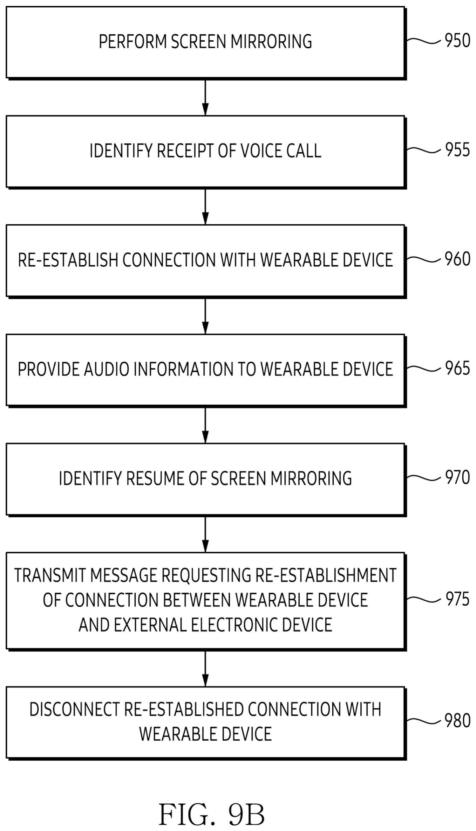

In addition, for example, based on the execution of the switching manager, the processor 311 may identify receipt of a voice call. For example, the processor 311 may identify the voice call received through communication circuitry (not illustrated) of the electronic device 101. For example, the communication circuitry may be different from the first communication circuitry 313 and the second communication circuitry 315. For example, the communication circuitry may be used for a connection between an external network or a base station related to the receipt of the voice call and the electronic device 101. The processor 311 may perform the receipt (or transmission) of the voice call based on the communication circuitry. In addition, for example, the processor 311 may identify termination or a rejection of the received voice call. Accordingly, the processor 311 may perform (or request) the audio path switching based on the receipt, the termination, or the rejection of the voice call. Specific details related thereto are described below in FIGS. 9A and 9B.

In addition, for example, based on the execution of the switching manager, the processor 311 may identify whether the wearable device 103 is connected to the electronic device 101 in a state in which the screen mirroring is being performed. For example, the processor 311 may perform (or request) the audio path switching for the wearable device 103 based on identifying that a connection between the wearable device 103 and the electronic device 101 is established while the screen mirroring is being executed.

In addition, for example, based on the execution of the switching manager, the processor 311 may identify control information and execute a corresponding function. For example, the processor 311 may identify the control information transmitted from the wearable device 103 and may execute a corresponding function. For example, the control information may be transmitted directly from the wearable device 103 or may be transferred through the external electronic device 105. In addition, for example, the processor 311 may provide a message requesting the function identified based on the control information to the external electronic device 105. In addition, in an embodiment, in a case in which the control information is transferred through the external electronic device 105, at least a portion of the control information may not be provided to the processor 311, and may be used to execute a designated function in the external electronic device 105.

For example, the control information may be generated based on a designated gesture. The designated gesture may include a single tap, a double tap, or a triple tap, or a press or a long press, and the like. A function according to the designated gesture may be set for each device (e.g., the electronic device 101 or the external electronic device 105) and for each software application in the device. For example, the function according to the designated gesture may include volume control, media control, call control, or execution of a voice recognition mode.

For example, in a state in which the electronic device 101 establishes a first connection 321 with the wearable device 103, audio information is outputted through the external electronic device 105 as a second connection 322 for screen mirroring with the external electronic device 105 is established. However, the electronic device 101 according to embodiments of the present disclosure may, by controlling through the switching manager, perform (or request) the audio path switching (e.g., switching from the external electronic device 105 to the wearable device 103) even if the second connection 322 is established in a state in which the first connection 321 is established. Accordingly, the electronic device 101 may cause (or induce) the audio information to be outputted through the wearable device 103.

According to an embodiment, the wearable device 103 may include at least one of a processor 331, communication circuitry 333, an output device 335, or memory 337. According to an embodiment, the processor 331, the communication circuitry 333, the output device 335, or the memory 337 may be operatively, functionally, and/or electrically connected by an electronical component such as a communication bus. A type and/or the number of hardware components included in the wearable device 103 is not limited to what is illustrated in FIG. 3. For example, the wearable device 103 may include only a portion of the hardware components illustrated in FIG. 3. For example, the processor 331 may correspond to the processor 311 of the electronic device 101. For example, the communication circuitry 333 may correspond to the first communication circuitry 313 of the electronic device 101. For example, the memory 337 may correspond to the memory 317 of the electronic device 101. To reduce redundancy in description, overlapping descriptions may be omitted. According to an embodiment, the output device 335 may include a device for outputting audio information provided from the outside. For example, the output device 335 may include a speaker that outputs the audio information. For example, the wearable device 103 may include an electronic device that may be worn on a body part of the user. For example, the body part may include a head part or an ear. However, an embodiment of the present disclosure is not limited thereto. In addition, the wearable device 103 may include an electronic device that outputs the audio information. For example, the wearable device 103 may include a true wireless stereo (TWS) or an extended reality (XR) device. Hereinafter, the wearable device 103 may be referred to as an audio output device, a pairing device, or a second external electronic device.

According to an embodiment, the external electronic device 105 may include at least one of a processor 351, first communication circuitry 353, second communication circuitry 355, a display 357, or memory 359. According to an embodiment, the processor 351, the first communication circuitry 353, the second communication circuitry 355, the display 357, or the memory 359 may be operatively, functionally, and/or electrically connected with each other by an electronical component such as a communication bus. A type and/or the number of hardware components included in the external electronic device 105 is not limited to what is illustrated in FIG. 3. For example, the external electronic device 105 may include only a portion of the hardware components illustrated in FIG. 3. For example, the processor 351 may correspond to the processor 311 of the electronic device 101. For example, the first communication circuitry 353 may correspond to the first communication circuitry 313 of the electronic device 101. For example, the second communication circuitry 355 may correspond to the second communication circuitry 315 of the electronic device 101. For example, the memory 359 may correspond to the memory 317 of the electronic device 101. To reduce redundancy in description, overlapping descriptions may be omitted. According to an embodiment, the display 357 may include a device for outputting video information provided from the outside. For example, the video information may be provided from the electronic device 101. For example, the electronic device 101 may provide data including video information and audio information of media to the external electronic device 105. For example, the electronic device 101 may generate the data by performing encoding of the video information and the audio information of the media. The electronic device 101 may provide the encoded data to the external electronic device 105. For example, the external electronic device 105 may receive the encoded data from the electronic device 101, and may obtain the video information and the audio information by decoding the received encoded data. For example, the external electronic device 105 may display a rendered screen (or visual information) based on the video information through the display 357. Although not illustrated in FIG. 3, the external electronic device 105 may include an output device. For example, the output device may include a device for outputting the audio information. For example, the output device may include a speaker that outputs the audio information.

Referring to FIG. 3, the electronic device 101 may establish the first connection 321 with the wearable device 103. For example, the electronic device 101 may establish the first connection 321 with the wearable device 103 based on the first communication circuitry 313. The first connection 321 may be used to provide audio information from the electronic device 101 to the wearable device 103. For example, the electronic device 101 may provide the audio information through the first connection 321. The audio information may indicate audio information of media being played by the electronic device 101.

In addition, the electronic device 101 may establish the second connection 322 with the external electronic device 105. For example, the electronic device 101 may establish the second connection 322 with the external electronic device 105 based on the second communication circuitry 315. The second connection 322 may be used to perform screen mirroring. The screen mirroring may indicate a technology in which the media being played on the electronic device 101 is displayed on the external electronic device 105. For example, the electronic device 101 may provide data for performing the screen mirroring to the external electronic device 105 through the second connection 322. For example, the data may include the video information and the audio information of the media.

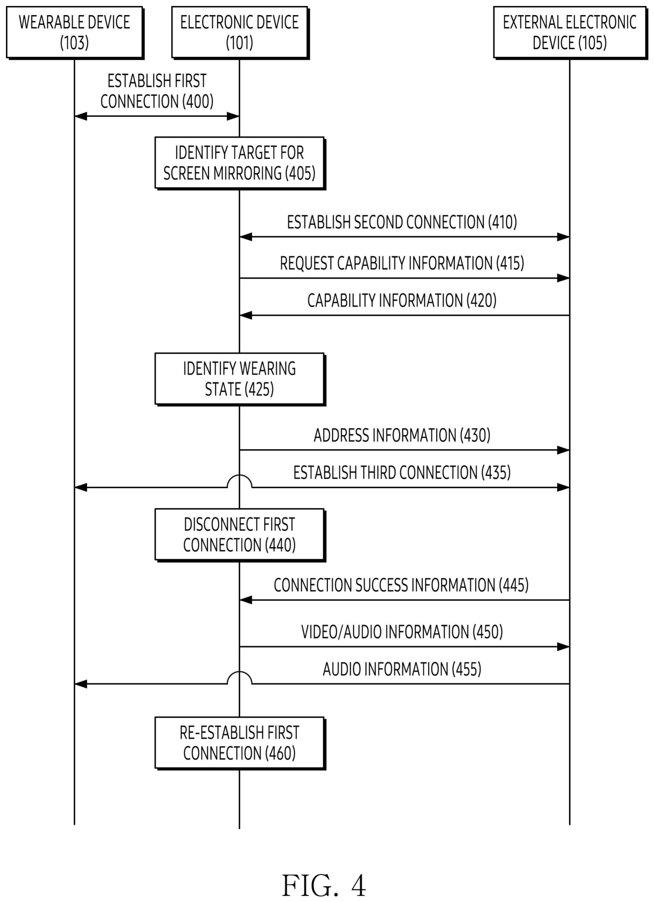

According to an embodiment, based on performing the audio path switching, a third connection 323 may be established. For example, the third connection 323 may indicate a connection between the external electronic device 105 and the wearable device 103. For example, the external electronic device 105 may establish the third connection 323 with the wearable device 103 through the first communication circuitry 353. At this time, the external electronic device 105 may identify the wearable device 103 based on address information of the wearable device 103 received while establishing the second connection 322, and may establish the third connection 323. For example, the address information may include address information of the wearable device that is used by the wearable device to establish the first connection 321. For example, the address information may include a media access control (MAC) address of the wearable device 103 for the first connection 321 between the electronic device 101 and the wearable device. The address information may be referred to as a BT MAC address, a BT address, address information, or BT identification information. Specific details related thereto are described below in FIG. 4.

In relation to the second connection 322 of FIG. 3, the electronic device 101 may be referred to as a source or a server that provides the media, and the external electronic device 105 may be referred to as a sync, a client, or a player that plays the media.

In relation to the first connection 321 and the third connection 323 of FIG. 3, the wearable device 103 may be referred to as a slave that outputs the audio information, and the electronic device 101 or the external electronic device 105 may be referred to as a master. In the present disclosure, the audio path switching for the wearable device 103 may include changing the master from the electronic device 101 to the external electronic device 105.

FIG. 4 illustrates an example of a method for switching an audio path in association with screen mirroring.

An electronic device 101 of FIG. 4 may include the electronic device 101 of FIG. 3. A wearable device 103 of FIG. 4 may include the wearable device 103 of FIG. 3. An external electronic device 105 of FIG. 4 may include the external electronic device 105 of FIG. 3.

Referring to FIG. 4, in operation 400, a first connection (e.g., the first connection 321 of FIG. 3) between the electronic device 101 and the wearable device 103 may be established. For example, the electronic device 101 may establish the first connection with the wearable device 103 through first communication circuitry 313. For example, the electronic device 101 may broadcast a packet for searching peripheral devices connectable through the first communication circuitry 313. The electronic device 101 may establish the first connection with the wearable device 103, which is searched based on the packet, through authentication.

According to an embodiment, the electronic device 101 may broadcast the packet for searching the peripheral devices connectable through the first communication circuitry 313. For example, in a case of attempting the first connection based on the first communication scheme (e.g., BT), the electronic device 101 may periodically transmit the packet advertising the electronic device 101 to the peripheral devices. For example, the electronic device 101 may broadcast the packet of a designated size (e.g., 31 bytes or less), and may perform the first connection by receiving a response packet from at least some of the peripheral devices.

In operation 405, according to an embodiment, the electronic device 101 may identify a target for screen mirroring. For example, the electronic device 101 may identify one or more external electronic devices for screen mirroring. For example, the electronic device 101 may perform discovery based on a signal transmitted through second communication circuitry 313. For example, the discovery may indicate an operation for establishing a second connection (e.g., the second connection 322 of FIG. 3) with the electronic device 101. For example, based on the discovery, the electronic device 101 may identify the one or more external electronic devices.

According to an embodiment, the electronic device 101 may perform the discovery to establish the second connection with the external electronic device 105 through the second communication circuitry 313. For example, the second communication circuitry 313 may include Wi-Fi Direct, Web real-time communication (RTC), Wi-Fi, or NFC. For example, in a case of using the Wi-Fi Direct scheme through the second communication circuitry 313, the electronic device 101 may perform the discovery. For example, in performing the discovery, the electronic device 101 may exchange information on the electronic device 101 and information on the one or more external electronic devices.

In operation 410, the electronic device 101 and the external electronic device 105 may establish the second connection. For example, the electronic device 101 may establish the second connection with the external electronic device 105 through the second communication circuitry 315. For example, the electronic device 101 may identify the external electronic device 105 from among the one or more external electronic devices based on an input. For example, the input may include an input for a portion corresponding to the external electronic device 105 of a screen displaying information on the one or more external electronic devices. For example, the screen may be displayed through a display of the electronic device 101. However, an embodiment of the present disclosure is not limited thereto. For example, the electronic device 101 may identify the external electronic device 105 most recently (or last) connected from among the one or more external electronic devices, and may establish the second connection with the external electronic device 105.

Although not illustrated in FIG. 4, after establishing the second connection, the electronic device 101 may perform signaling with the external electronic device 105. For example, the signaling may include an OPTIONS request for a server to return an accept type, a DESCRIBE request including a uniform resource locator (URL), and a SETUP request including information on a transmission point.

In operation 415, the electronic device 101 may transmit a request for capability information to the external electronic device 105. For example, the electronic device 101 may transmit a message requesting the capability information to the external electronic device 105. For example, the message requesting the capability information may be referred to as an M3 request message or an M3 message. The M3 request message may be included in a real-time streaming protocol (RTSP) message. For example, the M3 message may be used to retrieve (or search for) a parameter value of a presentation or stream designated based on a uniform resource identifier (URI).

According to an embodiment, the capability information may include whether the external electronic device 105 supports a function of switching an audio path. The function of switching the audio path may be referred to as an audio path switching function, a pair switching function, a paired device switching function, or a switching function.

According to an embodiment, the external electronic device 105 may identify whether it supports the switching function. For example, in a case in which the switching function is implemented in the external electronic device 105, the external electronic device 105 may identify that it supports the switching function. For example, in a case of supporting the function, the external electronic device 105 may decode video information and audio information obtained from the electronic device 101, and then provide the re-encoded audio information to the wearable device 103. At this time, the external electronic device 105 may be in a state in which a third connection (e.g., the third connection 323 of FIG. 3) with the wearable device 103 is established. A specific example related thereto is described below in operations 435 to 455.

In operation 420, the electronic device 101 may receive the capability information from the external electronic device 105. For example, the electronic device 101 may receive a message including the capability information from the external electronic device 105. For example, the message including the capability information may be referred to as an M3 response message or an M3 message. The M3 response message may be included in an RTSP message.

For example, in a case in which the switching function is supported, the capability information may include a designated value (e.g., 1 (enable)). In contrast, in a case in which the switching function is not supported, the capability information may include a value (e.g., 0 (disable)) different from the designated value.

In operation 425, the electronic device 101 may identify a wearing state of the wearable device 103. For example, the electronic device 101 may identify whether the wearable device 103 is in a first state or in a second state different from the first state. For example, the first state may indicate a state in which the wearable device 103 is worn by a user, and the second state may indicate another state in which the wearable device 103 is not worn by the user.

According to an embodiment, the electronic device 101 may obtain sensing information from the wearable device 103. For example, the electronic device 101 may receive the sensing information from the wearable device 103 based on the first connection. For example, the sensing information may include a value indicating the first state or the second state identified by the wearable device 103 based on at least one sensor. Specific details related thereto may refer to the content of Table 1 described above.

In operation 430, the electronic device 101 may transmit address information to the external electronic device 105. For example, the electronic device 101 may transmit the address information to the external electronic device 105 based on identifying the first state in which the wearable device 103 is worn, in the operation 425. For example, the electronic device 101 may transmit a message including the address information to the external electronic device 105. For example, the message including the address information may be referred to as an M4 request message or an M4 message. The M4 request message may be included in an RTSP message. For example, the M4 message may be used to request a setting for a parameter value of a presentation or stream designated based on a uniform resource identifier (URI).

According to an embodiment, the electronic device 101 may transmit, to the external electronic device 105, the message including the address information and request information for setting the parameter value, based on identifying the first state. In contrast, the electronic device 101 may transmit, to the external electronic device 105, the message including the request information for setting the parameter value, among the address information and the request information for setting the parameter value, based on identifying the second state.

According to an embodiment, the address information may include address information of the wearable device 103 that is used by the wearable device 103 to establish the first connection. For example, the address information may include a media access control (MAC) address of the wearable device 103 for the first connection. The address information may be referred to as a BT MAC address, a BT address, address information, or BT identification information. For example, the address information may also include device information of the wearable device 103 (e.g., a device name and an identifier of the wearable device 103).

According to an embodiment, the message including the address information may include a plurality of address information. For example, the message may include the address information and other address information. For example, the other address information may include address information of another wearable device paired with the electronic device 101 and worn by the user. For example, the other address information may include a MAC address of the other wearable device for a BT connection, such as the address information.

In operation 435, the third connection (e.g., the third connection 323 of FIG. 3) between the external electronic device 105 and the wearable device 103 may be established. For example, the external electronic device 105 may identify the wearable device 103 based on the address information. The external electronic device 105 may establish the third connection with the identified wearable device 103.

According to an embodiment, the external electronic device 105 may identify a record or history of connection (or pairing) with the wearable device 103. For example, in a case in which there is no history of connection with the wearable device 103, the external electronic device 105 may display a pop-up for performing pairing with the wearable device 103. The pop-up may be referred to as a user interface. The external electronic device 105 may establish the third connection with the wearable device 103 based on an input to the pop-up. In contrast, in a case in which there is a history of connection with the wearable device 103, the external electronic device 105 may omit displaying the pop-up and establish the third connection with the wearable device 103.

In operation 440, the electronic device 101 may disconnect (or release) the first connection. For example, as the third connection between the wearable device 103 and the external electronic device 105 is established, the electronic device 101 may identify the disconnection of the first connection by the wearable device 103.

According to an embodiment, as the first connection is disconnected, a path (or an audio path) for outputting audio information may be switched. For example, before the first connection is disconnected, the audio information may be outputted through a first audio path connected in an order of the electronic device 101 and the wearable device 103. In contrast, in a case in which the first connection is disconnected and the third connection is established, the audio information may be outputted through a second audio path connected in an order of the electronic device 101, the external electronic device 105, and the wearable device 103. In other words, switching of the audio path may be performed.

In operation 445, the electronic device 101 may receive connection success information from the external electronic device 105. For example, the external electronic device 105 may transmit a message including the connection success information to the electronic device 101. For example, the message including the connection success information may be included in an RTSP message. For example, the connection success information may include information indicating that the third connection is established.

According to an embodiment, the electronic device 101 may also receive connection failure information from the external electronic device 105. For example, the connection failure information may include information indicating that a connection different from the third connection is established, or that the establishment of the third connection failed.

In operation 450, the electronic device 101 may transmit video information and audio information to the external electronic device 105. For example, after receiving the message including the connection success information, the electronic device 101 may perform the screen mirroring with the external electronic device 105. For example, while performing the screen mirroring, the electronic device 101 may transmit a message including the video information and the audio information to the external electronic device 105. For example, the electronic device 101 may generate the message including the video information and the audio information by performing encoding of the video information and the audio information of the media. The message including the video information and the audio information may be included in a real-time transport protocol (RTP) message. For example, the RTP message may be used to transmit data including the video information and the audio information. For example, the electronic device 101 may transmit the message including the encoded data to the external electronic device 105.

In operation 455, the external electronic device 105 may transmit the audio information to the wearable device 103. For example, while performing the screen mirroring, the external electronic device 105 may transmit the audio information to the wearable device 103 through the third connection.

According to an embodiment, the external electronic device 105 may decode the message received from the electronic device 101. For example, the external electronic device 105 may obtain the video information and the audio information based on the decoded message. For example, the external electronic device 101 may transmit a signal including the obtained audio information to the wearable device 103. For example, the signal may be encoded according to a protocol used in the third connection. Alternatively, according to an embodiment, the external electronic device 105 may forward the audio information in the message received from the electronic device 101 to the wearable device 103.

In operation 460, the electronic device 101 may re-establish the first connection. For example, the electronic device 101 may re-establish the first connection based on identifying an interruption event of the screen mirroring. For example, the interruption event may include a pause (or a stop) of the screen mirroring or receipt of a voice call. For example, based on identifying the interruption event, the electronic device 101 may re-establish the first connection in a state in which the second connection is maintained. At this time, the electronic device 101 may be in a state in which it does not transmit a message including video and audio information to the external electronic device 105. An operation according to the interruption event is described in detail in FIGS. 8A to 9B below.

Although not illustrated in FIG. 4, the electronic device 101 may receive a message including connection termination information from the external electronic device 105. For example, the message including the connection termination information may be included in an RTSP message. For example, the connection termination information may include information indicating that the established third connection is terminated. According to an embodiment, the electronic device 101 may attempt to establish the first connection with the wearable device 103 based on receiving the message including the connection termination information. Alternatively, according to an embodiment, in a case of disconnecting the second connection for the screen mirroring with the external electronic device 105, the electronic device 101 may attempt to establish the first connection with the wearable device 103.

FIG. 5 illustrates an example of an operation flow of a method in which an electronic device switches an audio path in association with screen mirroring.

At least a portion of the method of FIG. 5 may be performed by the electronic device 101 of FIG. 3. For example, at least a portion of the method may be controlled by a processor 311 of the electronic device 101. In the following embodiment, each operation may be performed sequentially, but it is not necessarily performed sequentially. For example, an order of each operation may be changed, and at least two operations may be performed in parallel.

In operation 500, according to an embodiment, the electronic device 101 may identify one or more external electronic devices for screen mirroring. For example, the electronic device 101 may identify one or more external electronic devices capable of executing screen mirroring.

In operation 505, according to an embodiment, the electronic device 101 may establish a connection with an external electronic device (e.g., an external electronic device 105) identified based on an input. For example, the electronic device 101 may establish a connection with an external electronic device identified from among one or more external electronic devices based on an input. For example, the connection may include the second connection (e.g., the second connection 322 of FIG. 3) between the electronic device 101 and the external electronic device, which is established through second communication circuitry 315 of the electronic device 101.

In operation 510, according to an embodiment, the electronic device 101 may identify whether the external electronic device supports a function of switching an audio path.

According to an embodiment, the electronic device 101 may transmit a request for capability information to the external electronic device. For example, the electronic device 101 may transmit a message requesting the capability information to the external electronic device. For example, the message requesting the capability information may be referred to as an M3 request message or an M3 message. The M3 request message may be included in a real-time streaming protocol (RTSP) message. For example, the M3 message may be used to obtain a parameter value of a presentation or stream designated based on a uniform resource identifier (URI).

According to an embodiment, the capability information may include whether the external electronic device supports a function of switching an audio path. The function of switching the audio path may be referred to as an audio path switching function, a pair switching function, a paired device switching function, or a switching function.

According to an embodiment, the electronic device 101 may receive the capability information from the external electronic device. For example, the electronic device 101 may receive a message including the capability information from the external electronic device. For example, the message including the capability information may be referred to as an M3 response message or an M3 message. The M3 response message may be included in an RTSP message.

According to an embodiment, the electronic device 101 may identify whether the external electronic device supports the switching function based on the message including the capability information. For example, in a case in which the switching function is supported, the capability information may include a designated value (e.g., 1 (enable)). In contrast, in a case in which the switching function is not supported, the capability information may include a value (e.g., 0 (disable)) different from the designated value.

In a case in which the external electronic device supports the switching function in the operation 510, the electronic device 101 may perform operation 515. In contrast, in a case in which the external electronic device does not support the switching function in the operation 510, the electronic device 101 may perform operation 525.

In the operation 515, the electronic device 101 may identify whether it is connected to a wearable device (e.g., a wearable device 103). For example, the electronic device 101 may identify whether the connection between the electronic device 101 and the wearable device is in an established state. In other words, the electronic device 101 may identify whether the wearable device is in a paired state. For example, the connection between the electronic device 101 and the wearable device may include the first connection (e.g., the first connection 321 of FIG. 3) between the electronic device 101 and the wearable device, which is established through first communication circuitry 313 of the electronic device 101.

In a case in which the first connection with the wearable device is established in the operation 515, the electronic device 101 may perform operation 520. In contrast, in a case in which the first connection with the wearable device is not established in the operation 515, the electronic device 101 may perform the operation 525.

In the operation 520, the electronic device 101 may identify whether the wearable device is in a first state. For example, the first state may include a state in which the wearable device is worn by a user. In contrast, another state in which the wearable device is not worn by the user may be referred to as a second state. For example, the second state may include a case in which the wearable device is positioned inside a case for storing the wearable device with the case in an open state, a case in which the wearable device is positioned inside the case with the case in a closed state, a case in which the wearable device is positioned outside the case, or a case in which it is not possible to identify whether the wearable device is worn (or an unknown state).

In a case in which the wearable device is in the first state in the operation 520, the electronic device 101 may perform operation 530. In contrast, in a case in which the wearable device is in the second state in the operation 520, the electronic device 101 may perform the operation 525.

In the operation 525, the electronic device 101 may perform the screen mirroring. For example, the electronic device 101 may perform the screen mirroring in a case in which the external electronic device does not support the function in the operation 510. Alternatively, for example, the electronic device 101 may perform the screen mirroring in a case of being not connected to the wearable device in the operation 520. Alternatively, for example, the electronic device 101 may transmit, to the external electronic device, a message including request information for setting a parameter value of a presentation or stream designated based on a uniform resource identifier (URI), based on identifying the second state. For example, the message may be referred to as an M4 request message or an M4 message. The M4 request message may be included in an RTSP message.

For example, the electronic device 101 may obtain information (e.g., the setting of the parameter value) for performing the screen mirroring with the external electronic device based on the message. Accordingly, the electronic device 101 may perform the screen mirroring with the external electronic device. In this case, video information and audio information provided from the electronic device 101 to the external electronic device may be outputted by the external electronic device. For example, the external electronic device may output the video information and the audio information through a display (e.g., the display 357 of FIG. 3) and an output device.

In the operation 530, the electronic device 101 may transmit address information of the wearable device (e.g., device information or MAC address information of the wearable device). For example, the electronic device 101 may transmit the address information to the external electronic device based on identifying the first state in which the wearable device is worn. For example, the electronic device 101 may transmit a message including the address information to the external electronic device. For example, the message including the address information may be referred to as an M4 request message or an M4 message. The M4 request message may be included in an RTSP message. For example, the M4 message may be used to request a setting for a parameter value of a presentation or stream designated based on a uniform resource identifier (URI).

According to an embodiment, the electronic device 101 may transmit, to the external electronic device, the message including the address information and the request information for setting the parameter value, based on identifying the first state. According to an embodiment, the address information may include address information of the wearable device that is used by the wearable device to establish the first connection. For example, the address information may include a media access control (MAC) address of the wearable device 103 for the connection between the electronic device 101 and the wearable device. The address information may be referred to as a BT MAC address, a BT address, address information, or BT identification information. For example, the address information may also include device information of the wearable device 103 (e.g., a device name and an identifier of the wearable device 103).

According to an embodiment, the message including the address information may include a plurality of address information. For example, the message may include the address information and other address information. For example, the other address information may include address information of another wearable device paired with the electronic device 101 and worn by the user. For example, the other address information may include a MAC address of the other wearable device for a BT connection, such as the address information.

In the operation 535, the electronic device 101 may perform the screen mirroring using a connection between the wearable device and the external electronic device. For example, the connection between the external electronic device and the wearable device may include the third connection (e.g., the third connection 323 of FIG. 3) between the external electronic device and the wearable device, which is established through communication circuitry (e.g., the first communication circuitry 353 of FIG. 3) of the external electronic device.

According to an embodiment, the third connection may be established based on the address information. For example, the external electronic device may identify the wearable device based on the address information. The external electronic device may establish the third connection with the identified wearable device.

According to an embodiment, the electronic device 101 may disconnect (or release) the first connection between the electronic device 101 and the wearable device. For example, as the third connection is established, the electronic device 101 may identify the disconnection of the first connection by the wearable device.

According to an embodiment, as the first connection is disconnected, a path (or an audio path) for outputting audio information may be switched. For example, before the first connection is disconnected, the audio information may be outputted through a first audio path connected in an order of the electronic device 101 and the wearable device. In contrast, in a case in which the first connection is disconnected and the third connection is established, the audio information may be outputted through a second audio path connected in an order of the electronic device 101, the external electronic device, and the wearable device. In other words, switching of the audio path may be performed.

According to an embodiment, the electronic device 101 may receive connection success information from the external electronic device. For example, the external electronic device may transmit a message including the connection success information to the electronic device 101. For example, the message including the connection success information may be included in an RTSP message. For example, the connection success information may include information indicating that the third connection is established.

According to an embodiment, the electronic device 101 may also receive connection failure information from the external electronic device. For example, the connection failure information may include information indicating that a connection different from the connection between the wearable device and the external electronic device is established, or that the establishment of the connection between the wearable device and the external electronic device failed.

According to an embodiment, the electronic device 101 may transmit video information and audio information to the external electronic device. For example, after receiving the message including the connection success information, the electronic device 101 may perform the screen mirroring with the external electronic device. For example, while performing the screen mirroring, the electronic device 101 may transmit a message including the video information and the audio information to the external electronic device. The message including the video information and the audio information may be included in a real-time transport protocol (RTP) message. For example, the RTP message may be used to transmit data including the video information and the audio information. For example, the electronic device 101 may transmit the message including the encoded data to the external electronic device.

According to an embodiment, the audio information may be provided to the wearable device. For example, while performing the screen mirroring, the audio information may be provided from the external electronic device to the wearable device through the third connection.

In operation 540, the electronic device 101 may identify an interruption event of the screen mirroring. For example, the interruption event may include a pause (or a stop) of the screen mirroring or receipt of a voice call.

In a case in which the interruption event is identified in the operation 540, the electronic device 101 may perform operation 545. In contrast, in a case in which the interruption event is not identified in the operation 540, the operation 535 may be performed. In other words, the electronic device 101 may maintain the performance of the screen mirroring using the third connection.

In the operation 545, the electronic device 101 may re-establish the first connection between the electronic device 101 and the wearable device. For example, based on identifying the interruption event, the electronic device 101 may re-establish the first connection in a state in which the second connection is maintained. At this time, the electronic device 101 may be in a state in which it does not transmit a message including video and audio information to the external electronic device 105. An operation according to the interruption event is described in detail in FIGS. 8A to 9B below.

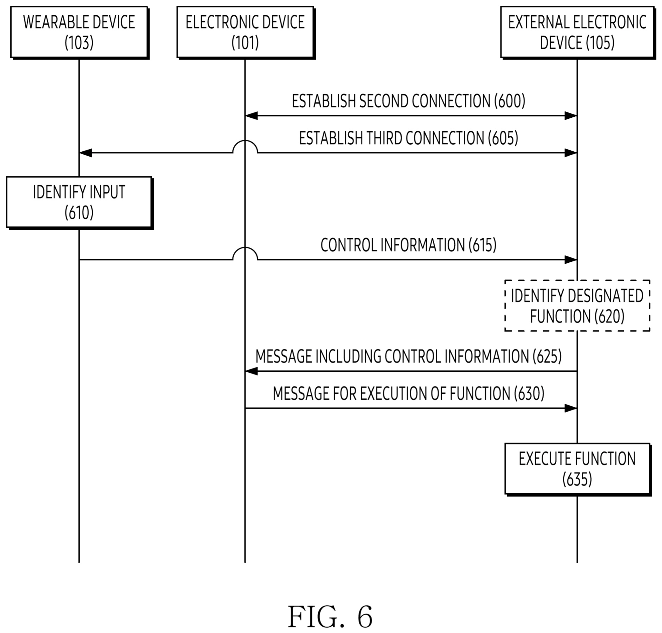

FIG. 6 illustrates an example of a method for performing control with respect to media while screen mirroring is being performed.

An electronic device 101 of FIG. 6 may include the electronic device 101 of FIG. 3. A wearable device 103 of FIG. 6 may include the wearable device 103 of FIG. 3. An external electronic device 105 of FIG. 6 may include the external electronic device 105 of FIG. 3.

In operation 600, a second connection between the electronic device 101 and the external electronic device 105 may be established. For example, the electronic device 101 may establish the second connection with the external electronic device 105 through second communication circuitry 315. Specific details related thereto may be substantially applied in the same manner as the operation 410 of FIG. 4.

In operation 605, a third connection between the external electronic device 105 and the wearable device 103 may be established. For example, the external electronic device 105 may identify the wearable device 103 based on address information of the wearable device 103. The external electronic device 105 may establish the third connection with the identified wearable device 103.

According to an embodiment, the address information may include address information of the wearable device 103 that is used by the wearable device 103 to establish a first connection. The first connection may indicate a connection established between the electronic device 101 and the wearable device 103 before the third connection is established. For example, the address information may include a media access control (MAC) address of the wearable device 103 for the first connection. The address information may be referred to as a BT MAC address, a BT address, address information, or BT identification information.

According to the operation 600 and the operation 605, the electronic device 101 may perform the screen mirroring using the third connection. In other words, the operation 600 and the operation 605 may indicate an example of an operation between the operation 400 and the operation 455 of FIG. 4.

In operation 610, the wearable device 103 may identify an input of a user. For example, the wearable device 103 may identify the gesture for generating control information. For example, the wearable device 103 may identify the touch input for generating the control information.

For example, the control information may be generated based on a designated gesture. The designated gesture may include a single tap, a double tap, or a triple tap, or a press or a long press, and the like. A function according to the designated gesture may be set for each device (e.g., the electronic device 101 or the external electronic device 105) and for each software application in the device. For example, the function according to the designated gesture may include volume control, media control, call control, or execution of a voice recognition mode.

In operation 615, the wearable device 103 may transmit the control information to the external electronic device 105. For example, the wearable device 103 may transmit a signal including the control information to the external electronic device 105 through communication circuitry 333 of the wearable device 103.

According to an embodiment, the wearable device 103 may also directly transmit the control information to the electronic device 101 in a case in which a designated condition is satisfied. For example, the designated condition may include a case in which a connection that may directly transmit the control information to the electronic device 101 is established, or a case in which transmission of an emergency signal (e.g., an emergency call) is involved.

In operation 620, the external electronic device 105 may identify a designated function. For example, the external electronic device 105 may identify whether the control information included in the signal received from the wearable device 103 corresponds to the designated function. The control information corresponding to the designated function may indicate that the control information triggers (or causes) the designated function. For example, the designated function may include a function (e.g., volume control of the external electronic device 105) that the external electronic device 105 may directly process based on the control information. Accordingly, the electronic device 101 may identify the designated function based on the control information. However, an embodiment of the present disclosure is not limited thereto. For example, the operation 620 may be omitted.

In operation 625, the external electronic device 105 may transmit a message including the control information to the electronic device 101. For example, the message including the control information may be included in an RTSP message.

According to an embodiment, the external electronic device 105 may obtain the control information from the signal received from the wearable device 103, and may forward the message including the control information to the electronic device 101 without verifying the control information. In contrast, according to an embodiment, after identifying, in the operation 620, whether the control information corresponds to the designated function, the external electronic device 105 may transmit the message including the control information to the electronic device 101 in a case in which the control information does not correspond to the designated function.

In operation 630, according to an embodiment, the electronic device 101 may transmit a message for execution of a function to the external electronic device 105. For example, after receiving the message including the control information, the electronic device 101 may identify the function based on the control information. For example, the function may indicate a function triggered (or caused) by the control information. For example, the electronic device 101 may transmit the message for instructing execution of the identified function to the external electronic device 105. For example, the message for instructing execution of the function may be included in an RTSP message.

In operation 635, the external electronic device 105 may execute the function. For example, after receiving the message for instructing execution of the function, the external electronic device 105 may execute the function instructed based on the message. Alternatively, for example, the external electronic device 105 may execute the designated function identified in the operation 620.

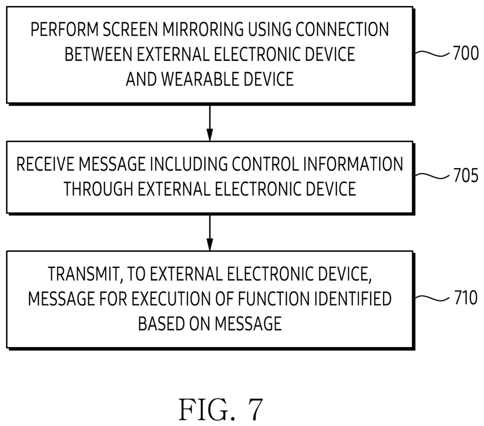

FIG. 7 illustrates an example of an operation flow of a method in which an electronic device performs control with respect to media while screen mirroring is being performed.

At least a portion of the method of FIG. 7 may be performed by the electronic device 101 of FIG. 3. For example, at least a portion of the method may be controlled by a processor 311 of the electronic device 101. In the following embodiment, each operation may be performed sequentially, but it is not necessarily performed sequentially. For example, an order of each operation may be changed, and at least two operations may be performed in parallel.

In operation 700, according to an embodiment, the electronic device 101 may perform screen mirroring using a connection (e.g., the third connection 323 of FIG. 3) between an external electronic device (e.g., the external electronic device 105 of FIG. 3) and a wearable device (e.g., the wearable device 103 of FIG. 3). For example, the electronic device 101 may transmit a message including the address information of the wearable device to the external electronic device, based on identifying that the wearable device is connected and that the wearable device is worn by a user. For example, the external electronic device may establish the third connection based on the address information. Thereafter, the electronic device 101 may disconnect a first connection between the wearable device and the electronic device 101, and perform the screen mirroring. The screen mirroring may be performed based on a second connection (e.g., the second connection 322 of FIG. 3) between the electronic device 101 and the external electronic device. For example, while performing the screen mirroring, the electronic device 101 may transmit video information and audio information for media playback to the external electronic device.

In operation 705, the electronic device 101 may receive a message including control information through the external electronic device. For example, while performing the screen mirroring, the electronic device 101 may receive the message including the control information from the external electronic device. For example, the message including the control information may be included in an RTSP message.

According to an embodiment, the control information may be transmitted from the wearable device. For example, the wearable device 103 may identify a designated gesture for generating the control information. For example, the control information may be generated based on the designated gesture. The designated gesture may include a single tap, a double tap, or a triple tap, or a press or a long press, and the like. A function according to the designated gesture may be set for each device (e.g., the electronic device 101 or the external electronic device 105) and for each software application in the device. For example, the function according to the designated gesture may include volume control, media control, call control, or execution of a voice recognition mode.

According to an embodiment, the control information may be forwarded to the electronic device 101 through the external electronic device. Alternatively, according to an embodiment, the control information may, after being transmitted to the external electronic device, be used to identify whether it corresponds to a function designated by the external electronic device. Thereafter, the external electronic device may transmit the control information that does not correspond to the designated function to the electronic device 101. In a case in which the control information corresponds to the designated function, the external electronic device may not transmit the control information to the electronic device 101.

In operation 710, the electronic device 101 may transmit, to the external electronic device, a message for execution of a function identified based on the message. For example, after receiving the message including the control information, the electronic device 101 may identify the function based on the control information. For example, the function may indicate a function triggered (or caused) by the control information. For example, the electronic device 101 may transmit the message for instructing execution of the identified function to the external electronic device. For example, the message for instructing execution of the function may be included in an RTSP message.

According to an embodiment, the external electronic device may execute the function. For example, after receiving the message for instructing execution of the function, the external electronic device may execute the function instructed based on the message. Alternatively, for example, the external electronic device may execute the designated function identified by the external electronic device.

FIG. 8A illustrates an example of a method in which an electronic device connects to a wearable device in response to a pause of screen mirroring.

According to an embodiment, FIG. 8A illustrates an example 800 in which an electronic device 101 re-establishes a connection 820 with a wearable device 103 based on identifying an interruption event that indicates a pause of the screen mirroring, while the electronic device 101 is performing the screen mirroring in the connection state of FIG. 2B (e.g., the connection 210 and the connection 230).

The electronic device 101 of the example 800 may include the electronic device 101 of FIG. 3. The wearable device 103 of the example 800 may include the wearable device 103 of FIG. 3. An external electronic device 105 of the example 800 may include the external electronic device 105 of FIG. 3.

Although not illustrated in the example 800, referring to FIG. 2B, the electronic device 101 may establish the connection 210 with the external electronic device 105, and the external electronic device 105 may establish the connection 230 with the wearable device 103. Accordingly, the electronic device 101 may disconnect a connection 220 with the wearable device 103. According to an embodiment, the electronic device 101 may perform the screen mirroring using the connection 230. While performing the screen mirroring, the electronic device 101 may provide data (the video information and audio information) for the media to the external electronic device 105. In addition, the external electronic device 105 may provide the audio information to the wearable device 103. The external electronic device 105 may display a screen based on the video information, and the wearable device 103 may output the audio information.

Referring to the example 800, according to an embodiment, the electronic device 101 may identify a pause of the screen mirroring while performing the screen mirroring using the connection 230. For example, the electronic device 101 may obtain an input 805 for the pause of the screen mirroring. For example, based on obtaining the input 805, the electronic device 101 may identify the pause of the screen mirroring. The pause of the screen mirroring may be included in an interruption event of the screen mirroring.

According to an embodiment, the electronic device 101 may re-establish the connection 820 based on identifying the interruption event. For example, after identifying the interruption event, the electronic device 101 may re-establish the connection 820 with the wearable device 103. Accordingly, the connection 230 between the wearable device 103 and the external electronic device 105 may be disconnected. At this time, the connection 210 between the electronic device 101 and the external electronic device 105 is not disconnected, but the electronic device 101 may not provide data for media (e.g., a video) playback to the external electronic device 105. Accordingly, the electronic device 101 is playing the media, but the external electronic device 105 may display a standby screen. For example, the standby screen may include a screen on which nothing is displayed (i.e., a black screen).

According to an embodiment, the electronic device 101 may provide audio information included in the data to the wearable device 103 through the re-established connection 820. The wearable device 103 may output the audio information. Accordingly, a user 200 may be provided with the audio information through the wearable device 103.

FIG. 8B illustrates an example of an operation flow of a method in which an electronic device connects to a wearable device in response to a pause of screen mirroring.

At least a portion of the method of FIG. 8B may be performed by the electronic device 101 of FIG. 3. For example, at least a portion of the method may be controlled by a processor 311 of the electronic device 101. In the following embodiment, each operation may be performed sequentially, but it is not necessarily performed sequentially. For example, an order of each operation may be changed, and at least two operations may be performed in parallel.

In operation 850, the electronic device 101 may perform screen mirroring using a connection (e.g., the third connection 323 of FIG. 3) between an external electronic device (e.g., the external electronic device 105 of FIG. 3) and a wearable device (e.g., the wearable device 103 of FIG. 3).

In operation 855, the electronic device 101 may identify a pause of the screen mirroring. For example, the electronic device 101 may obtain an input for the pause of the screen mirroring. The electronic device 101 may perform the pause based on the obtained input. For example, the electronic device 101 may provide a message including information for the pause to the external electronic device. The message may be included in an RTSP message. Based on the message, the external electronic device may disconnect the third connection between the wearable device and the external electronic device.

According to an embodiment, the electronic device 101 may maintain a second connection between the external electronic device and the electronic device 101. For example, even if the third connection is disconnected as the message including the information for the pause is transmitted, the electronic device 101 may maintain the second connection. This may be to perform a faster resume when the resume of the screen mirroring is identified thereafter. However, even if the electronic device 101 maintains the second connection, it may not transmit data for media playback to the external electronic device.

In operation 860, the electronic device 101 may re-establish the connection with the wearable device. For example, the electronic device 101 may re-establish the first connection based on identifying the pause. For example, the first connection may be established through first communication circuitry 313 of the electronic device 101.

In operation 865, the electronic device 101 may provide audio information to the wearable device. For example, the electronic device 101 may transmit the audio information to the wearable device through the re-established first connection. For example, the audio information may indicate audio information of the media being played by the electronic device 101.

In operation 870, the electronic device 101 may identify a resume of the screen mirroring. For example, the electronic device 101 may obtain another input for the resume of the screen mirroring. The electronic device 101 may perform the resume based on the other input that is obtained.

In operation 875, the electronic device 101 may transmit a message requesting re-establishment of the connection between the wearable device and the external electronic device. For example, the electronic device 101 may transmit the message requesting the re-establishment of the third connection to the external electronic device. The message requesting the re-establishment of the third connection may be transmitted through the second connection.

According to an embodiment, the message requesting the re-establishment of the third connection may include address information of the wearable device. For example, the message including the address information may be referred to as an M4 request message or an M4 message. The M4 request message may be included in an RTSP message. For example, the M4 message may be used to request a setting for a parameter value of a presentation or stream designated based on a uniform resource identifier (URI). Specific details related thereto may be substantially applied in the same manner as the operation 430 to the operation 435 of FIG. 4.

In operation 880, the electronic device 101 may disconnect the re-established connection with the wearable device. For example, the electronic device 101 may disconnect the re-established first connection, based on the third connection between the wearable device and the external electronic device being re-established based on the message including the address information.

Accordingly, in a case in which the electronic device 101 transmits the data for the playback of the media to the external electronic device while performing the screen mirroring, video information of the data may be displayed through a display of the external electronic device, and audio information of the data may be outputted through an output device of the wearable device.

FIG. 9A illustrates an example of a method in which an electronic device connects to a wearable device in response to identifying receipt of a voice call.

FIG. 9A illustrates an example 900 in which an electronic device 101 re-establishes a connection 920 with a wearable device 103 based on identifying an interruption event that indicates a pause of the screen mirroring, while the electronic device 101 is performing the screen mirroring in the connection state of FIG. 2B (the connection 210 and the connection 230).

The electronic device 101 of the example 900 may include the electronic device 101 of FIG. 3. The wearable device 103 of the example 900 may include the wearable device 103 of FIG. 3. An external electronic device 105 of the example 900 may include the external electronic device 105 of FIG. 3.

Although not illustrated in the example 900, referring to FIG. 2B, the electronic device 101 may establish the connection 210 with the external electronic device 105, and the external electronic device 105 may establish the connection 230 with the wearable device 103. Accordingly, the electronic device 101 may disconnect a connection 220 with the wearable device 103. According to an embodiment, the electronic device 101 may perform the screen mirroring using the connection 230. While performing the screen mirroring, the electronic device 101 may provide data (the video information and audio information) for the media to the external electronic device 105. In addition, the external electronic device 105 may provide the audio information to the wearable device 103. The external electronic device 105 may display a screen based on the video information, and the wearable device 103 may output the audio information.

Referring to the example 900, the electronic device 101 may identify receipt of a voice call while performing the screen mirroring using the connection 230. For example, the receipt of the voice call may be included in an interruption event of the screen mirroring.

According to an embodiment, the electronic device 101 may re-establish the connection 920 based on identifying the interruption event. For example, after identifying the interruption event, the electronic device 101 may re-establish the connection 920 with the wearable device 103. Accordingly, the connection 230 between the wearable device 103 and the external electronic device 105 may be disconnected. At this time, the connection 210 between the electronic device 101 and the external electronic device 105 is not disconnected, but the electronic device 101 may not provide data for media (e.g., a video) playback to the external electronic device 105. Accordingly, the electronic device 101 is playing a visual object indicating the receipt of the voice call, but the external electronic device 105 may display a standby screen. For example, the standby screen may include a screen on which nothing is displayed (i.e., a black screen).

According to an embodiment, the electronic device 101 may provide audio information included in the data to the wearable device 103 through the re-established connection 920. The wearable device 103 may output the audio information. Accordingly, a user 200 may be provided with the audio information through the wearable device 103.

FIG. 9B illustrates an example of an operation flow of a method in which an electronic device connects to a wearable device in response to identifying receipt of a voice call.

At least a portion of the method of FIG. 9B may be performed by the electronic device 101 of FIG. 3. For example, at least a portion of the method may be controlled by a processor 311 of the electronic device 101. In the following embodiment, each operation may be performed sequentially, but it is not necessarily performed sequentially. For example, an order of each operation may be changed, and at least two operations may be performed in parallel.

In operation 950, the electronic device 101 may perform screen mirroring using a connection (e.g., the third connection 323 of FIG. 3) between an external electronic device (e.g., the external electronic device 105 of FIG. 3) and a wearable device (e.g., the wearable device 103 of FIG. 3).

In operation 955, the electronic device 101 may identify receipt of a voice call. For example, the electronic device 101 may receive, through communication circuitry, a signal requesting a connection of the voice call to the electronic device 101 from another electronic device. Accordingly, the electronic device 101 may identify the receipt of the voice call. Based on identifying the receipt of the voice call, the electronic device 101 may perform a pause of the screen mirroring. For example, the electronic device 101 may provide a message including information for the pause to the external electronic device. The message may be included in an RTSP message. Based on the message, the external electronic device may disconnect the third connection between the wearable device and the external electronic device.

According to an embodiment, the electronic device 101 may maintain a second connection between the external electronic device and the electronic device 101. For example, even if the third connection is disconnected as the message including the information for the pause is transmitted, the electronic device 101 may maintain the second connection. This may be to perform a faster resume when the resume of the screen mirroring is identified thereafter. However, even if the electronic device 101 maintains the second connection, it may not transmit data for media playback to the external electronic device.

In operation 960, the electronic device 101 may re-establish a connection with the wearable device. For example, the electronic device 101 may re-establish the first connection based on identifying the pause. For example, the first connection may be established through first communication circuitry 313 of the electronic device 101.

According to an embodiment, the re-established first connection between the wearable device and the electronic device 101 may be used through a specific mode of the wearable device. For example, the specific mode may be referred to as a headset mode. The wearable device may perform the re-established first connection based on the headset mode, based on identifying that the re-established first connection is for the voice call, not for media playback. This may be to shorten a connection time of the re-established first connection. For example, the first connection for the playback of the media may be used through another mode of the wearable device. For example, the other mode may be referred to as an advanced audio distribution profile (a2dp) mode.

In operation 965, the electronic device 101 may provide audio information to the wearable device. For example, the electronic device 101 may transmit the audio information to the wearable device through the re-established first connection. For example, the audio information may indicate audio information of the media being played by the electronic device 101.

In operation 970, the electronic device 101 may identify a resume of the screen mirroring. For example, the electronic device 101 may identify a rejection of the voice call or an end of the voice call. The electronic device 101 may perform the resume based on identifying the rejection of the receipt of the voice call or the end of the voice call.

In operation 975, the electronic device 101 may transmit a message requesting re-establishment of the connection between the wearable device and the external electronic device. For example, the electronic device 101 may transmit the message requesting the re-establishment of the third connection to the external electronic device. The message requesting the re-establishment of the third connection may be transmitted through the second connection.

According to an embodiment, the message requesting the re-establishment of the third connection may include address information of the wearable device. For example, the message including the address information may be referred to as an M4 request message or an M4 message. The M4 request message may be included in an RTSP message. For example, the M4 message may be used to request a setting for a parameter value of a presentation or stream designated based on a uniform resource identifier (URI). Specific details related thereto may be substantially applied in the same manner as the operation 430 to the operation 435 of FIG. 4.

In operation 980, the electronic device 101 may disconnect the re-established connection with the wearable device. For example, the electronic device 101 may disconnect the re-established first connection with the wearable device, based on the third connection between the wearable device and the external electronic device being re-established based on the message including the address information.

Accordingly, in a case in which the electronic device 101 transmits the data for the playback of the media to the external electronic device while performing the screen mirroring, video information of the data may be displayed through a display of the external electronic device, and audio information of the data may be outputted through an output device of the wearable device.

Referring to FIG. 8A to FIG. 9B, an example is described in which the electronic device 101 identifies an interruption event of the screen mirroring and re-establishes a connection with the wearable device based on this. However, an embodiment of the present disclosure are not limited thereto. For example, embodiments of the present disclosure may also include a case in which the electronic device 101 performs the screen mirroring in a state in which a connection with the wearable device is not established, and then establishes the connection with the wearable device. For example, the electronic device 101 may establish a connection with the external electronic device to perform the screen mirroring. In a state in which the connection between the external electronic device and the electronic device 101 is established, the electronic device 101 may identify a connection request with the wearable device. For example, the connection request may include a user wearing the wearable device. The electronic device 101 may transmit a message including address information of the wearable device to the external electronic device, based on identifying the connection request with the wearable device. The message including the address information of the wearable device may be used to establish a connection between the external electronic device and the wearable device.

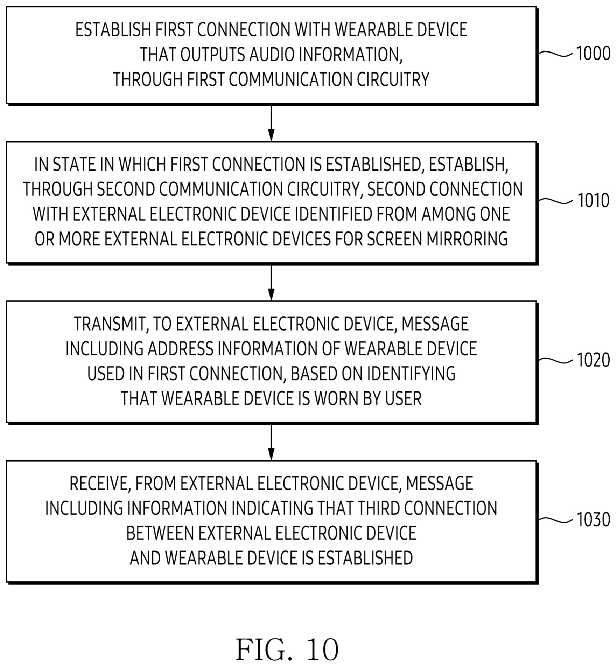

FIG. 10 illustrates an example of an operation flow of a method in which an electronic device establishes a connection for screen mirroring and switches an audio path in association with screen mirroring.

At least a portion of the method of FIG. 10 may be performed by the electronic device 101 of FIG. 3. For example, at least a portion of the method may be controlled by a processor 311 of the electronic device 101. In the following embodiment, each operation may be performed sequentially, but it is not necessarily performed sequentially. For example, an order of each operation may be changed, and at least two operations may be performed in parallel.

In operation 1000, the electronic device 101 may establish a first connection with a wearable device that outputs audio information, through first communication circuitry. For example, the wearable device may include the wearable device 103 of FIG. 3. For example, the first communication circuitry may include the first communication circuitry 313 of FIG. 3. For example, the wearable device may receive the audio information and output the received audio information.

According to an embodiment, the electronic device 101 may establish the first connection with the wearable device through the first communication circuitry. For example, the first communication circuitry may include a module that provides a first communication scheme. For example, the first communication scheme may include short-range wireless communication including Bluetooth (BT) or Bluetooth low energy (BLE). The first communication scheme may be referred to as a BT connection scheme.

In operation 1010, in a state in which the first connection is established, the electronic device 101 may establish, through second communication circuitry, a second connection with an external electronic device identified from among one or more external electronic devices for screen mirroring.

According to an embodiment, the electronic device 101 may identify the one or more external electronic devices for the screen mirroring. For example, the electronic device 101 may perform discovery based on a signal transmitted through the second communication circuitry. For example, the discovery may indicate an operation for establishing the second connection (e.g., the second connection 322 of FIG. 3) with the electronic device 101. For example, based on the discovery, the electronic device 101 may identify the one or more external electronic devices.

For example, the electronic device 101 may identify the external electronic device from among the one or more external electronic devices based on an input. For example, the input may include an input for a portion corresponding to the external electronic device 105 of a screen displaying information on the one or more external electronic devices. For example, the screen may be displayed through a display of the electronic device 101. However, an embodiment of the present disclosure is not limited thereto. For example, the electronic device 101 may identify the external electronic device most recently (or last) connected from among the one or more external electronic devices.

For example, the electronic device 101 may establish the second connection with the external electronic device based on the second communication circuitry included in the electronic device 101. For example, the second communication circuitry may be different from the first communication circuitry. For example, the second communication circuitry may include a module that provides a second communication scheme different from the first communication scheme. For example, the second communication scheme may include short-range wireless communication including wireless fidelity (Wi-Fi) or Wi-Fi direct. The second communication scheme may be referred to as a Wi-Fi connection scheme.

In operation 1020, the electronic device 101 may transmit, to the external electronic device, a message including address information of the wearable device used in the first connection, based on identifying that the wearable device is worn by a user.

According to an embodiment, the electronic device 101 may identify a wearing state of the wearable device. For example, the electronic device 101 may identify whether the wearable device is in a first state or in a second state different from the first state. For example, the first state may indicate a state in which the wearable device is worn by the user, and the second state may indicate another state in which the wearable device is not worn by the user.

According to an embodiment, the electronic device 101 may transmit the address information to the external electronic device. For example, the electronic device 101 may transmit the address information to the external electronic device based on identifying the first state in which the wearable device is worn. For example, the electronic device 101 may transmit a message including the address information to the external electronic device. For example, the message including the address information may be referred to as an M4 request message or an M4 message. The M4 request message may be included in an RTSP message. For example, the M4 message may be used to request a setting for a parameter value of a presentation or stream designated based on a uniform resource identifier (URI).

According to an embodiment, the electronic device 101 may transmit, to the external electronic device, the message including the address information and request information for setting the parameter value, based on identifying the first state. In contrast, the electronic device 101 may transmit, to the external electronic device, the message including the request information for setting the parameter value, among the address information and the request information for setting the parameter value, based on identifying the second state.

According to an embodiment, the address information may include address information of the wearable device that is used by the wearable device to establish the first connection. For example, the address information may include a media access control (MAC) address of the wearable device for the first connection. The address information may be referred to as a BT MAC address, a BT address, address information, or BT identification information.

According to an embodiment, the message including the address information may include a plurality of address information. For example, the message may include the address information and other address information. For example, the other address information may include address information of another wearable device paired with the electronic device 101 and worn by the user. For example, the other address information may include a MAC address of the other wearable device for a BT connection, such as the address information.

Although not illustrated in FIG. 10, according to an embodiment, before transmitting the message including the address information, the electronic device 101 may transmit a request for capability information to the external electronic device. For example, the electronic device 101 may transmit a message requesting the capability information to the external electronic device. For example, the message requesting the capability information may be referred to as an M3 request message or an M3 message. The M3 request message may be included in a real-time streaming protocol (RTSP) message. For example, the M3 message may be used to obtain a parameter value of a presentation or stream designated based on a uniform resource identifier (URI).

According to an embodiment, the capability information may include whether the external electronic device supports a function of switching an audio path. The function of switching the audio path may be referred to as an audio path switching function, a pair switching function, a paired device switching function, or a switching function.

According to an embodiment, the external electronic device may identify whether it supports the switching function. For example, in a case in which the switching function is implemented in the external electronic device, the external electronic device may identify that it supports the switching function.

According to an embodiment, the electronic device 101 may receive the capability information from the external electronic device. For example, the electronic device 101 may receive a message including the capability information from the external electronic device. For example, the message including the capability information may be referred to as an M3 response message or an M3 message. The M3 response message may be included in an RTSP message. For example, in a case in which the switching function is supported, the capability information may include a designated value (e.g., 1 (enable)). In contrast, in a case in which the switching function is not supported, the capability information may include a value (e.g., 0 (disable)) different from the designated value.

In operation 1030, the electronic device 101 may receive, from the external electronic device, a message including information indicating that the third connection between the external electronic device and the wearable device is established.

According to an embodiment, the third connection between the external electronic device and the wearable device may be established. For example, the external electronic device may identify the wearable device based on the address information. The external electronic device may establish the third connection with the identified wearable device.

According to an embodiment, the electronic device 101 may disconnect (or release) the first connection. For example, as the third connection between the wearable device and the external electronic device is established, the electronic device 101 may identify the disconnection of the first connection by the wearable device.

According to an embodiment, the electronic device 101 may receive connection success information from the external electronic device. For example, the external electronic device may transmit a message including the connection success information to the electronic device 101. For example, the message including the connection success information may be included in an RTSP message. For example, the connection success information may include information indicating that the third connection is established.

According to an embodiment, the electronic device 101 may receive also connection failure information from the external electronic device. For example, the connection failure information may include information indicating that a connection different from the third connection is established, or that the establishment of the third connection failed.

According to an embodiment, the electronic device 101 may transmit video information and audio information to the external electronic device. For example, after receiving the message including the connection success information, the electronic device 101 may perform the screen mirroring with the external electronic device. For example, while performing the screen mirroring, the electronic device 101 may transmit a message including the video information and the audio information to the external electronic device. The message including the video information and the audio information may be included in a real-time transport protocol (RTP) message. For example, the RTP message may be used to transmit data including the video information and the audio information. For example, the electronic device 101 may transmit the message including the encoded data to the external electronic device.

According to an embodiment, the external electronic device may transmit the audio information to the wearable device. For example, while performing the screen mirroring, the external electronic device may transmit the audio information to the wearable device through the third connection.

According to an embodiment, the external electronic device may decode the message received from the electronic device 101. For example, the external electronic device may obtain the video information and the audio information based on the decoded message. For example, the external electronic device 101 may transmit a signal including the obtained audio information to the wearable device. For example, the signal may be encoded according to a protocol used in the third connection. Alternatively, according to an embodiment, the external electronic device may forward the audio information in the message received from the electronic device 101 to the wearable device.

According to an embodiment, the electronic device 101 may re-establish the first connection. For example, the electronic device 101 may re-establish the first connection based on identifying an interruption event of the screen mirroring. For example, the interruption event may include a pause (or a stop) of the screen mirroring or receipt of a voice call. For example, based on identifying the interruption event, the electronic device 101 may re-establish the first connection in a state in which the second connection is maintained. At this time, the electronic device 101 may be in a state in which it does not transmit a message including video and audio information to the external electronic device. Specific details related thereto may be substantially applied in the same manner as the contents of FIGS. 8A to 9B.

According to an embodiment, the electronic device 101 may receive a message including connection termination information from the external electronic device. For example, the message including the connection termination information may be included in an RTSP message. For example, the connection termination information may include information indicating that the established third connection is terminated.

Referring to FIGS. 1 to 10, an electronic device and a method according to embodiments of the present disclosure may seamlessly provide audio information of the media through the wearable device in a process in which a user, in a state of wearing a wearable device (e.g., the wearable device 103 of FIG. 3), views media being played on an electronic device (e.g., the electronic device 101 of FIG. 3) through an external electronic device (e.g., the external electronic device 105). In other words, a connection between the wearable device and the external electronic device may be automatically established without the user performing additional setting or an operation for a connection with respect to the wearable device.

In addition, in the screen mirroring in which the media provided from the electronic device is outputted by the external electronic device, the electronic device and the method according to embodiments of the present disclosure may more effectively match sync between audio information and video information of the media as the wearable device and the external electronic device are connected. For example, in a case in which the user listens to the audio information of the media through the wearable device by reconnecting the wearable device to the electronic device while the screen mirroring is being performed, a difference in processing time (e.g., encoding time and decoding time) between the video information and the audio information of the media may occur. At this time, the difference may be referred to as latency. However, the electronic device and the method according to embodiments of the present disclosure may reduce a sync mismatch by connecting the external electronic device and the wearable device in a connection process between the electronic device and the external electronic device.

In addition, the electronic device and the method according to embodiments of the present disclosure may also be applied in a case in which the screen mirroring is performed with respect to the external electronic device that supports a digital living network alliance (DLNA). The DLNA is a function of transmitting the media of the electronic device to the external electronic device and playing the media on the external electronic device, and the electronic device may not play the media. In a case in which the electronic device and the external electronic device perform the screen mirroring based on the DLNA, the wearable device may not output audio information even if it is connected to the electronic device. This is because only the external electronic device plays the media including the audio information and the video information. However, in the electronic device and the method according to embodiments of the present disclosure, as the external electronic device and the wearable device are connected while the screen mirroring based on the DLNA is being performed, the user may be provided with the audio information through the wearable device.

In addition, the electronic device and the method according to embodiments of the present disclosure may perform control with respect to the electronic device (or the media being played by the electronic device) even while performing the screen mirroring, through a designated gesture with respect to the wearable device. Accordingly, the electronic device and the method according to embodiments of the present disclosure may provide the user with a more convenient user experience.

As described above, an electronic device 101 may comprise first communication circuitry 313. The electronic device 101 may comprise memory 317, comprising one or more storage media, storing instructions. The electronic device 101 may comprise second communication circuitry 315 different from the first communication circuitry 313. The electronic device 101 may comprise at least one processor 311 comprising processing circuitry. The instructions, when executed individually or collectively by the at least one processor 311, may cause the electronic device 101 to establish, through the first communication circuitry 313, a first connection with a wearable device 103 receiving audio information. The instructions, when executed individually or collectively by the at least one processor 311, may cause the electronic device 101 to, in a state in which the first connection is established, establish, through the second communication circuitry 315, a second connection with an external electronic device 105 identified from among one or more external electronic devices for screen mirroring. The instructions, when executed individually or collectively by the at least one processor 311, may cause the electronic device 101 to, based on identifying that the wearable device 103 is worn by a user, transmit, to the external electronic device 105, a message including address information of the wearable device 103 used in the first connection. The instructions, when executed individually or collectively by the at least one processor 311, may cause the electronic device 101 to receive, from the external electronic device 105, a message including information indicating that a third connection between the external electronic device 105 and the wearable device 103 is established.

According to an embodiment, the instructions, when executed individually or collectively by the at least one processor 311, may cause the electronic device 101 to perform discovery of the one or more external electronic devices based on the second communication circuitry 315. The instructions, when executed individually or collectively by the at least one processor 311, may cause the electronic device 101 to establish the second connection with the external electronic device 105 identified from among the discovered external electronic devices based at least in part on an input of the user. The instructions, when executed individually or collectively by the at least one processor 311, may cause the electronic device 101 to, in a state in which the second connection is established, transmit, to the external electronic device 105, a message requesting capability information regarding a function of switching an audio path. The instructions, when executed individually or collectively by the at least one processor 311, may cause the electronic device 101 to receive, from the external electronic device 105, in response to the message requesting the capability information, a message including information indicating whether the function is supported.

According to an embodiment, the instructions, when executed individually or collectively by the at least one processor 311, may cause the electronic device 101 to, based on identifying that the external electronic device 105 supports the function based on the message including information indicating whether the function is supported, identify whether the wearable device 103 is in a first state in which it is worn by the user. The instructions, when executed individually or collectively by the at least one processor 311, may cause the electronic device 101 to, based on identifying the first state, transmit, to the external electronic device 105, the message including request information for setting a parameter based on a uniform resource identifier (URI) and the address information. The instructions, when executed individually or collectively by the at least one processor 311, may cause the electronic device 101 to, based on identifying a second state different from the first state, transmit, to the external electronic device 105, a message including the request information among the request information for setting the parameter and the address information.

According to an embodiment, the message including the address information may include the address information and other address information. The other address information may include address information of another wearable device 103 paired with the electronic device 101 and worn by the user.

According to an embodiment, the instructions, when executed individually or collectively by the at least one processor 311, may cause the electronic device 101 to perform the screen mirroring with the external electronic device 105 after receiving the message including information indicating that the third connection is established. The instructions, when executed individually or collectively by the at least one processor 311, may cause the electronic device 101 to, while performing the screen mirroring, transmit, to the external electronic device 105, a message including the audio information and video information. The audio information may be provided to the wearable device 103 by the external electronic device through the third connection.

According to an embodiment, the instructions, when executed individually or collectively by the at least one processor 311, may cause the electronic device 101 to, while performing the screen mirroring, identify a pause of the screen mirroring based on an input of the user. The instructions, when executed individually or collectively by the at least one processor 311, may cause the electronic device 101 to, in response to identifying the pause, re-establish the first connection with the wearable device 103 in a state in which the second connection is established. The instructions, when executed individually or collectively by the at least one processor 311, may cause the electronic device 101 to transmit the audio information to the wearable device 103 based on the re-established first connection.

According to an embodiment, the instructions, when executed individually or collectively by the at least one processor 311, may cause the electronic device 101 to, based on identifying a resume of the paused screen mirroring, transmit, to the external electronic device 105, a message including the address information for the first connection and requesting re-establishment of the third connection. The instructions, when executed individually or collectively by the at least one processor 311, may cause the electronic device 101 to, based on receiving a message including information indicating that the third connection is re-established, disconnect the re-established first connection.

According to an embodiment, the instructions, when executed individually or collectively by the at least one processor 311, may cause the electronic device 101 to, while performing the screen mirroring, identify receipt of a voice call. The instructions, when executed individually or collectively by the at least one processor 311, may cause the electronic device 101 to, in response to identifying the receipt of the voice call, re-establish the first connection with the wearable device 103 in a state in which the second connection is established. The instructions, when executed individually or collectively by the at least one processor 311, may cause the electronic device 101 to transmit the audio information to the wearable device 103 based on the re-established first connection.

According to an embodiment, the instructions, when executed individually or collectively by the at least one processor 311, may cause the electronic device 101 to, based on identifying a rejection of the receipt of the voice call or termination of the voice call, transmit, to the external electronic device 105, a message including the address information for the first connection and requesting re-establishment of the third connection. The instructions, when executed individually or collectively by the at least one processor 311, may cause the electronic device 101 to, based on receiving a message including information indicating that the third connection is re-established, disconnect the re-established first connection.

According to an embodiment, the instructions, when executed individually or collectively by the at least one processor 311, may cause the electronic device 101 to perform the screen mirroring with the external electronic device 105 after receiving the message including information indicating that the third connection is established. The instructions, when executed individually or collectively by the at least one processor 311, may cause the electronic device 101 to, while performing the screen mirroring, receive, through the external electronic device 105, a message including control information transmitted from the wearable device 103. The control information may be associated with a designated gesture of the user with respect to the wearable device 103.

According to an embodiment, the instructions, when executed individually or collectively by the at least one processor 311, may cause the electronic device 101 to, based on receiving the message including the control information, transmit, to the external electronic device 105, a message requesting execution of a function corresponding to the control information.

According to an embodiment, each of the first connection and the third connection may be established based on a Bluetooth (BT) connection scheme. The second connection may be established based on a wireless fidelity (Wi-Fi) connection scheme. The address information may include a media access control (MAC) address used in the BT connection scheme.

According to an embodiment, the instructions, when executed individually or collectively by the at least one processor 311, may cause the electronic device 101 to disconnect the first connection based on identifying that the third connection between the external electronic device 105 and the wearable device 103 is established.

As described above, a method performed by an electronic device 101 may comprise establishing, through first communication circuitry 313 of the electronic device, a first connection with a wearable device 103 receiving audio information. The method may comprise, in a state in which the first connection is established, establishing, through second communication circuitry 315 of the electronic device, a second connection with an external electronic device 105 identified from among one or more external electronic devices for screen mirroring. The method may comprise, based on identifying that the wearable device 103 is worn by a user, transmitting, to the external electronic device 105, a message including address information of the wearable device 103 used in the first connection. The method may comprise receiving, from the external electronic device 105, a message including information indicating that a third connection between the external electronic device 105 and the wearable device 103 is established.

As described above, a non-transitory computer-readable storage medium may store one or more programs comprising instructions that, when executed individually or collectively by at least one processor 311 of an electronic device 101 including first communication circuitry 313 and second communication circuitry 315 different from the first communication circuitry 313, cause the electronic device 101 to establish, through the first communication circuitry 313, a first connection with a wearable device 103 receiving audio information. The non-transitory computer-readable storage medium may store one or more programs comprising instructions that, when executed individually or collectively by the at least one processor 311, cause the electronic device 101 to, in a state in which the first connection is established, establish, through the second communication circuitry 315, a second connection with an external electronic device 105 identified from among one or more external electronic devices for screen mirroring. The non-transitory computer-readable storage medium may store one or more programs comprising instructions that, when executed individually or collectively by the at least one processor 311, cause the electronic device 101 to, based on identifying that the wearable device 103 is worn by a user, transmit, to the external electronic device 105, a message including address information of the wearable device 103 used in the first connection. The non-transitory computer-readable storage medium may store one or more programs comprising instructions that, when executed individually or collectively by the at least one processor 311, cause the electronic device 101 to receive, from the external electronic device 105, a message including information indicating that a third connection between the external electronic device 105 and the wearable device 103 is established.

As described above, an electronic device 105 may comprise first communication circuitry 353. The electronic device 105 may comprise memory 359, comprising one or more storage media, storing instructions. The electronic device 105 may comprise second communication circuitry 355 different from the first communication circuitry 353. The electronic device 105 may comprise at least one processor 351 comprising processing circuitry. The instructions, when executed individually or collectively by the at least one processor 351, may cause the electronic device 105 to establish, through the first communication circuitry 313, a first connection with an external electronic device 101 for screen mirroring. The instructions, when executed individually or collectively by the at least one processor 351, may cause the electronic device 105 to receive, through the first communication circuitry 353, from the external electronic device 101, a message including address information used in a second connection between a wearable device 103 worn by a user and the external electronic device 101. The instructions, when executed individually or collectively by the at least one processor 351, may cause the electronic device 105 to establish, through the second communication circuitry 355, a second connection with the wearable device 103 identified based on the message including the address information. The instructions, when executed individually or collectively by the at least one processor 351, may cause the electronic device 105 to transmit, to the external electronic device 101, a message including information indicating that the second connection is established.

According to an embodiment, the instructions, when executed individually or collectively by the at least one processor 351, may cause the electronic device 105 to, in a state in which the first connection is established, receive, from the external electronic device 101, a message requesting capability information regarding a function of switching an audio path. The instructions, when executed individually or collectively by the at least one processor 351, may cause the electronic device 105 to transmit, to the external electronic device 101, in response to the message requesting the capability information, a message including information indicating whether the function is supported.

According to an embodiment, the message including the address information may include request information for setting a parameter based on a uniform resource identifier (URI).

According to an embodiment, the instructions, when executed individually or collectively by the at least one processor 351, may cause the electronic device 105 to perform the screen mirroring with the external electronic device 101 after transmitting the message including information indicating that the second connection is established. The instructions, when executed individually or collectively by the at least one processor 351, may cause the electronic device 105 to, while performing the screen mirroring, receive, from the external electronic device 101, a message including the audio information and video information. The instructions, when executed individually or collectively by the at least one processor 351, may cause the electronic device 105 to transmit, to the wearable device 103, a signal including the audio information.

According to an embodiment, the instructions, when executed individually or collectively by the at least one processor 351, may cause the electronic device 105 to, while performing the screen mirroring, receive, from the wearable device 103, a signal including control information. The instructions, when executed individually or collectively by the at least one processor 351, may cause the electronic device 105 to transmit, to the external electronic device 101, a message including the received control information. The instructions, when executed individually or collectively by the at least one processor 351, may cause the electronic device 105 to, based on receiving, from the external electronic device 101, a message requesting execution of a function corresponding to the control information, execute the function. The control information may be associated with a designated gesture of the user with respect to the wearable device 103.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
memory (317), comprising one or more storage media, storing instructions;
first communication circuitry (313);
second communication circuitry (315) different from the first communication circuitry (313); and
at least one processor (311) comprising processing circuitry,
wherein the instructions, when executed individually or collectively by the at least one processor (311), cause the electronic device (101) to:
establish, through the first communication circuitry (313), a first connection with a wearable device (103) receiving audio information;
in a state in which the first connection is established, establish, through the second communication circuitry (315), a second connection with an external electronic device (105) identified from among one or more external electronic devices for screen mirroring;
based on identifying that the wearable device (103) is worn by a user, transmit, to the external electronic device (105), a message including address information of the wearable device (103) used in the first connection; and
receive, from the external electronic device (105), a message including information indicating that a third connection between the external electronic device (105) and the wearable device (103) is established.

2. The electronic device (101) of Claim 1, wherein the instructions, when executed individually or collectively by the at least one processor (311), cause the electronic device (101) to:
perform discovery of the one or more external electronic devices based on the second communication circuitry (315);
establish the second connection with the external electronic device (105) identified from among the discovered external electronic devices based at least in part on an input of the user;
in a state in which the second connection is established, transmit, to the external electronic device (105), a message requesting capability information regarding a function of switching an audio path; and
receive, from the external electronic device (105), in response to the message requesting the capability information, a message including information indicating whether the function is supported.

3. The electronic device (101) of Claim 2, wherein the instructions, when executed individually or collectively by the at least one processor (311), cause the electronic device (101) to:
based on identifying that the external electronic device (105) supports the function based on the message including information indicating whether the function is supported, identify whether the wearable device (103) is in a first state in which it is worn by the user;
based on identifying the first state, transmit, to the external electronic device (105), the message including request information for setting a parameter based on a uniform resource identifier (URI) and the address information; and
based on identifying a second state different from the first state, transmit, to the external electronic device (105), a message including the request information among the request information for setting the parameter and the address information.

4. The electronic device (101) of Claim 1, wherein the message including the address information includes the address information and other address information,
wherein the other address information includes address information of another wearable device (103) paired with the electronic device (101) and worn by the user.

5. The electronic device (101) of Claim 1, wherein the instructions, when executed individually or collectively by the at least one processor (311), cause the electronic device (101) to:
after receiving the message including information indicating that the third connection is established, perform the screen mirroring with the external electronic device (105); and
while performing the screen mirroring, transmit, to the external electronic device (105), a message including the audio information and video information,
wherein the audio information is provided to the wearable device (103) by the external electronic device through the third connection.

6. The electronic device (101) of Claim 5, wherein the instructions, when executed individually or collectively by the at least one processor (311), cause the electronic device (101) to:
while performing the screen mirroring, identify a pause of the screen mirroring based on an input of the user;
in response to identifying the pause, re-establish the first connection with the wearable device (103) in a state in which the second connection is established; and
transmit the audio information to the wearable device (103) based on the re-established first connection.

7. The electronic device (101) of Claim 6, wherein the instructions, when executed individually or collectively by the at least one processor (311), cause the electronic device (101) to:
based on identifying a resume of the paused screen mirroring, transmit, to the external electronic device (105), a message including the address information for the first connection and requesting re-establishment of the third connection; and
based on receiving a message including information indicating that the third connection is re-established, disconnect the re-established first connection.

8. The electronic device (101) of Claim 5, wherein the instructions, when executed individually or collectively by the at least one processor (311), cause the electronic device (101) to:
while performing the screen mirroring, identify receipt of a voice call;
in response to identifying the receipt of the voice call, re-establish the first connection with the wearable device (103) in a state in which the second connection is established; and
transmit the audio information to the wearable device (103) based on the re-established first connection.

9. The electronic device (101) of Claim 8, wherein the instructions, when executed individually or collectively by the at least one processor (311), cause the electronic device (101) to:
based on identifying a rejection of the receipt of the voice call or termination of the voice call, transmit, to the external electronic device (105), a message including the address information for the first connection and requesting re-establishment of the third connection; and
based on receiving a message including information indicating that the third connection is re-established, disconnect the re-established first connection.

10. The electronic device (101) of Claim 1, wherein the instructions, when executed individually or collectively by the at least one processor (311), cause the electronic device (101) to:
after receiving the message including information indicating that the third connection is established, perform the screen mirroring with the external electronic device (105); and
while performing the screen mirroring, receive, through the external electronic device (105), a message including control information transmitted from the wearable device (103),
wherein the control information is associated with a designated gesture of the user with respect to the wearable device (103).

11. The electronic device (101) of Claim 10, wherein the instructions, when executed individually or collectively by the at least one processor (311), cause the electronic device (101) to:
based on receiving the message including the control information, transmit, to the external electronic device (105), a message requesting execution of a function corresponding to the control information.

12. The electronic device (101) of Claim 1,
wherein each of the first connection and the third connection is established based on a Bluetooth (BT) connection scheme,
wherein the second connection is established based on a wireless fidelity (Wi-Fi) connection scheme, and
wherein the address information includes a media access control (MAC) address used in the BT connection scheme.

13. The electronic device (101) of Claim 1, wherein the instructions, when executed individually or collectively by the at least one processor (311), cause the electronic device (101) to:
disconnect the first connection based on identifying that the third connection between the external electronic device (105) and the wearable device (103) is established.

14. A method performed by an electronic device (101), the method comprising:
establishing, through first communication circuitry (313) of the electronic device (101), a first connection with a wearable device (103) receiving audio information;
in a state in which the first connection is established, establishing, through second communication circuitry (315) of the electronic device (101), a second connection with an external electronic device (105) identified from among one or more external electronic devices for screen mirroring;
based on identifying that the wearable device (103) is worn by a user, transmitting, to the external electronic device (105), a message including address information of the wearable device (103) used in the first connection; and
receiving, from the external electronic device (105), a message including information indicating that a third connection between the external electronic device (105) and the wearable device (103) is established.

15. A non-transitory computer-readable storage medium storing one or more programs comprising instructions that, when executed individually or collectively by at least one processor (311) of an electronic device (101) including first communication circuitry (313) and second communication circuitry (315) different from the first communication circuitry (313), cause the electronic device (101) to:
establish, through the first communication circuitry (313), a first connection with a wearable device (103) receiving audio information;
in a state in which the first connection is established, establish, through the second communication circuitry (315), a second connection with an external electronic device (105) identified from among one or more external electronic devices for screen mirroring;
based on identifying that the wearable device (103) is worn by a user, transmit, to the external electronic device (105), a message including address information of the wearable device (103) used in the first connection; and
receive, from the external electronic device (105), a message including information indicating that a third connection between the external electronic device (105) and the wearable device (103) is established.
